# EUROPÄISCHE PATENTSCHRIFT

(11) **EP 0 865 014 B1**
(45) Veröffentlichungstag und Bekanntmachung des Hinweises auf die Patenterteilung: **31.08.2005**
(21) Anmeldenummer: 98103662.7
(22) Anmeldetag: 03.03.1998
(51) Int. Cl.: G01C 21/20, G10L 15/22

(54) **Verfahren und Vorrichtung zur Spracheingabe einer Zieladresse in ein Zielführungssystem im Echtzeitbetrieb**
Method and device to enter by speech an address of destination in a navigation system in real time
Procédé et appareil d'indication de destination par commande vocale à un système de navigation en temps réel

(30) Priorität: 10.03.1997 DE 19709518
(43) Veröffentlichungstag der Anmeldung: 16.09.1998
(73) Patentinhaber: Harman Becker Automotive Systems GmbH, 76307 Karlsbad (DE)
(72) Erfinder: Class, Fritz, Dr., 72587 Römerstein (DE); Kuhn, Thomas, Dr., 89075 Ulm (DE); Möller, Carsten-Uwe, 73257 Köngen (DE); Reh, Frank, 70439 Stuttgart (DE); Nüssle, Gerhard, 89134 Blaustein (DE)
(74) Vertreter: Grünecker, Kinkeldey, Stockmair & Schwanhäusser Anwaltssozietät

(56) Entgegenhaltungen:
- EP-A- 0 346 483
- JP-A- 7 064 480
- JP-A- 8 202 386
- US-A- 4 866 778

## Beschreibung

Die Erfindung betrifft ein Verfahren zur Spracheingabe einer Zieladresse in ein Zielführungssystem im Echtzeitbetrieb gemäß dem Oberbegriff des Patentanspruchs 1 sowie eine Vorrichtung zum Ausführen des Verfahrens gemäß Oberbegriff des Patentanspruchs 12.

Die DE 196 00 700 beschreibt ein Zielführunassystem für ein Kraftfahrzeug, bei welchem als Eingabevorrichtung ein fest montierter Schalter, ein Berührfeldschalter oder ein Spracherkennungsgerät verwendet werden kann. Das Dokument geht aber nicht auf die Spracheingabe einer Zieladresse in ein Zielführungssystem ein.

Die EP 0 736 853 A1 beschreibt ebenfalls ein Zielführungssystem für ein Kraftfahrzeug. Die Spracheingabe einer Zieladresse in ein Zielführungssystem ist aber nicht Gegenstand dieses Dokuments.

Die DE 36 08 497 A1 beschreibt ein Verfahren zum sprachgesteuerten Bedienen eines Fernmeldeendgerätes, insbesondere eines Autotelefons. Als nachteilig wird an dem Verfahren angesehen, daß nicht auf die speziellen Probleme bei der Spracheingabe einer Zieladresse in ein Zielführungssystem eingegangen wird.

Aus der JP-A-08-202386 ist ein Navigationsgerät mit einem Spracherkennungsgerät bekannt, bei dem ein Ortsnamen-Lexikon der Orte entlang einer mittels Fernbediening bestimmten Route generiert wird.

Die JP-A-07 064 480 offenbart ein Spracherkennungsgerät für ein Navigationssystem in einem Fahrzeug, in dem die Ortsnamen in Gruppen zusammengefasst sind. Die Spracherkennung arbeitet mit einem Ortsnamen-Lexikon, in dem die Gruppen der Ortsnamen abhängig von der Distanz zur aktuellen Position des Fahrzeugs geordnet sind.

Die altere noch nicht vorveröffentlichte Patentanmeldung WO-A-97 10 583 der Anmelderin offenbart ein gattungsgemäßes Verfahren zur automatischen Steuerung eines oder mehrerer Geräte durch Sprachkommandos oder per Sprachdialog im Echtzeitbetrieb und eine Vorrichtung zum Ausführen des Verfahrens. Gemäß diesem Verfahren werden die eingegebenen Sprachkommandos mittels einer Spracherkennungseinrichtung, welche einen sprecherunabhängigen Spracherkenner und einen sprecherabhängigen Zusatz-Spracherkennner umfaßt, erkannt und gemäß ihrer Erkennungswahrscheinlichkeit als das eingegebene Sprachkommando identifiziert und die diesem Sprachkommando zugeordneten Funktionen des oder der Geräte initiiert. Die Sprachkommandos bzw. die Sprachdialoge werden dabei auf der Basis von mindestens einer Synataxstruktur, mindestens einem Basiskommandovokabular und bei Bedarf mindestens einem sprecherspezifischen Zusatzkommandovokabular gebildet. Die Syntaxstrukturen und die Basiskommandovokabularien werden in sprecherunabhängiger Form vorgegeben und sind während des Echtzeitbetriebs fixiert. Das sprecherspezifische Zusatzvokabular wird vom jeweiligen Sprecher eingegeben und/oder geändert, indem in Trainingsphasen innerhalb und außerhalb des Echtzeitbetriebs ein nach einem sprecherabhängigen Erkennungsverfahren arbeitender Zusatz-Spracherkenner vom jeweiligen Sprecher durch eine mindestens einmalige Eingabe der Zusatzkommandos auf die sprecherspezifischen Merkmale des jeweiligen Sprechers trainiert wird. Im Echtzeitbetrieb erfolgt die Abwicklung des Sprachdialogs und/oder die Steuerung der Geräte wie folgt:
- vom Benutzer eingegebene Sprachkommandos werden einem sprecherunabhängigen und auf der Basis von Phonemen arbeitenden Spracherkenner und dem sprecherabhängigen Zusatz-Spracherkenner zugeleitet und dort einer Merkmalextraktion unterzogen und im sprecherabhängigen Zusatz-Spracherkenner anhand der dort extrahierten Merkmale auf das Vorliegen von Zusatzkommandos aus dem Zusatzkommandovokabular untersucht und klassifiziert.
- anschließend werden die als mit einer bestimmten Wahrscheinlichkeit erkannt klassifizierten Kommandos und Syntaxstrukturen der beiden Spracherkenner zu hypothetischen Sprachkommandos zusammengefügt und diese gemäß der vorgegebenen Syntaxstruktur auf ihre Zulässigkeit und Erkennungswahrscheinlichkeit untersucht und klassifiziert.
- anschließend werden die zulässigen hypothetischen Sprachkommandos nach vorgegebenen Kriterien auf ihre Plausibilität untersucht und von den als plausibel erkannten hypothetischen Sprachkommandos dasjenige mit der höchsten Erkennungswahrscheinlichkeit ausgewählt und als das vom Benutzer eingegebene Sprachkommando identifiziert.
- anschließend werden die dem identifizierten Sprachkommando zugeordneten Funktionen der zu steuernden Geräte initiiert und/oder Antworten gemäß einer vorgegebenen Sprachdialogstruktur zur Fortführung des Sprachdialogs generiert. Gemäß dieses Dokuments kann das beschriebene Verfahren auch zur Bedienung eines Zielführungssystems eingesetzt werden, wobei die Eingabe einer Zieladresse durch die Eingabe von Buchstaben oder von Buchstabengruppen in einem Buchstabiermodus erfolgt und wobei vom Benutzer eine Liste zur Speicherung von Zieladressen für das Zielführungssystem unter vorgebbaren Namen/Abkürzungen angelegt werden kann.

Als nachteilig kann bei diesem beschriebenen Verfahren angesehen werden, daß auf die speziellen Eigenschaften eines Zielführungssystems nicht eingegangen wird und nur die Spracheingabe eines Zielortes mittels einem Buchstabiermodus angegeben wird.

Aufgabe der Erfindung ist es, ein gattungsgemäßes Verfahren so weiterzubilden, daß die besonderen Eigenschaften eines Zielführungssystems berücksichtigt werden und eine vereinfachte schnellere Spracheingabe einer Zieladresse in ein Zielführungssystem möglich ist und dadurch der Bedienkomfort verbessert wird. Ferner soll eine geeignete Vorrichtung zur Durchführung des Verfahrens angegeben werden.

Diese Aufgabe wird erfindungsgemäß mit den Merkmalen des Anspruches 1 oder 12 gelöst, wobei die Merkmale der Unteransprüche vorteilhafte Ausgestaltungen und Weiterbildungen kennzeichnen.

Das erfindungsgemäße Verfahren zur Spracheingabe von Zieladressen in ein Zielführungssystem verwendet zur Spracherkennung eine aus dem Stand der Technik bekannte Spracherkennungseinrichtung wie sie beispielsweise in dem in der Beschreibungseinleitung gewürdigten Dokument beschrieben wird, wobei die Spracherkennungseinrichtung wenigstens einen sprecherunabhängigen Spracherkenner und wenigstens einen sprecherabhängigen Zusatz-Spracherkenner umfaßt. Das erfindungsgemäße Verfahren ermöglicht verschiedene Eingabedialoge zur Spracheingabe von Zieladressen. In einem ersten Eingabedialog, im weiteren 'Zielorteingabe' genannt, wird der sprecherunabhängige Spracherkenner zur Erkennung von isoliert gesprochenen Zielorten und, wenn der isoliert gesprochene Zielort nicht erkannt wurde, zur Erkennung von verbunden gesprochenen Buchstaben und/oder Buchstabengruppen benutzt. In einem zweiten Eingabedialog, im weiteren 'Zielort buchstabieren' genannt, wird der sprecherunabhängige Spracherkenner zur Erkennung von verbunden gesprochenen Buchstaben und/oder Buchstabengruppen benutzt. In einem dritten Eingabedialog, im weiteren 'Grobzieleingabe' genannt, wird der sprecherunabhängige Spracherkenner zur Erkennung von isoliert gesprochenen Zielorten und, wenn der isoliert gesprochene Zielort nicht erkannt wurde, zur Erkennung von verbunden gesprochenen Buchstaben und/oder Buchstabengruppen benutzt. In einem vierten Eingabedialog, im weiteren 'Indirekte Eingabe' genannt, wird der sprecherunabhängige Spracherkenner zur Erkennung von verbunden gesprochenen Ziffern und/oder Zifferngruppen benutzt. Bei einem fünften Eingabedialog, im weiteren 'Straßeneingabe' genannt, wird der sprecherunabhängige Spracherkenner zur Erkennung von isoliert gesprochenen Straßennamen und, wenn der isoliert gesprochene Straßenname nicht erkannt wird, zur Erkennung von verbunden gesprochenen Buchstaben und/oder Buchstabengruppen benutzt. Durch die bisher beschriebenen Eingabedialoge werden dem Zielführungssystem verifizierte Zieladressen, welche jeweils einen Zielort und eine Straße umfassen, übergeben. Bei einem sechsten Eingabedialog, im weiteren 'Adresse abrufen' genannt, wird zusätzlich zum sprecherunabhängigen Spracherkenner der sprecherabhängige Zusatz-Spracherkenner zur Erkennung von isoliert gesprochenen Schlüsselworten benutzt. Bei einem siebten Eingabedialog, im weiteren 'Adresse speichern' genannt, wird einem vom Benutzer isoliert gesprochenem Schlüsselwort eine vom Benutzer eingegebene Zieladresse zugewiesen, wobei während des Eingabedialogs 'Adresse abrufen' ein dem entsprechenden erkannten Schlüsselwort zugewiesene Zieladresse an das Zielführungssystem übergeben wird.

Das erfindungsgemäße Verfahren beruht hauptsächlich darauf, daß nicht das gesamte zulässige Vokabular für eine Spracherkennungseinrichtung zum Zeitpunkt ihrer Aktivierung in der Spracherkennungseinrichtung geladen ist, sondern daß in Abhängigkeit der notwendigen Eingabedialoge zur Ausführung einer Bedienfunktion, zumindest ein notwendiges Lexikon aus dem gesamten möglichen Vokabular während des Echtzeitbetriebs generiert und in die Spracherkennungseinrichtung geladen wird. In der Bundesrepublik Deutschland gibt es über 100.000 Orte, die als Vokabular für das Zielführungssystem in Frage kommen. Würde dieses Vokabular in die Spracherkennungseinrichtung geladen werden, so wäre der Erkennungsvorgang extrem langsam und fehlerbehaftet. Ein aus diesem Vokabular generiertes Lexikon umfaßt nur ca. 1500 Worte, dadurch wird der Erkennungsvorgang wesentlich schneller und die Erkennungsrate wird größer. Als Datengrundlage für das erfindungsgemäße Verfahren wird wenigstens eine Zieldatei, welche alle möglichen Zieladressen und bestimmte Zusatzinformationen zu den möglichen Zieladressen eines Zielführungssystems umfaßt und auf mindestens einer Datenbasis gespeichert ist, verwendet. Aus dieser Zieldatei werden Lexika generiert, welche wenigstens Teile der Zieldatei umfassen, wobei wenigstens ein Lexikon in Abhängigkeit von wenigstens einem aktivierten Eingabedialog in Echtzeit generiert wird. Besonders vorteilhaft ist es wenn die Zieldatei zu jedem gespeicherten Zielort zusätzliche Informationen, beispielsweise Politische Zugehörigkeit bzw. Namenszusatz, Postleitzahl bzw. Postleitzahlenbereich, Ortsnetzkennzahl, Bundesland, Einwohnerzahl, Geographische Codierung, Phonetische Beschreibung oder Lexikonzugehörigkeit enthält. Diese Zusatzinformationen können dann zur Auflösung von Mehrdeutigkeiten bzw. zur Beschleunigung der Auffindung des gewünschten Zielortes herangezogen werden. Anstelle der phonetischen Beschreibung kann für die Spracherkennungseinrichtung eine Transkription der phonetischen Beschreibung in Form von einer Kette von Indizes, je nach Realisierung der Transkription, verwendet werden. Ferner kann eine sogenannte automatische phonetische Transkription, welche eine regelbasierende Umwandlung von orthographisch vorliegenden Namen unter Einbeziehung einer Ausnahmetabelle in eine phonetische Beschreibung durchführt, vorgesehen werden. Die Eintragung der Lexikonzugehörigkeit ist nur dann möglich, wenn die entsprechenden Lexika in einem 'Off-Line-Editiermodus', außerhalb des eigentlichen Betriebs des Zielführungssystems, aus der Zieldatei generiert wurden und auf der mindestens einen Datenbasis, beispielsweise einer CD-ROM oder einer externen Datenbank in einer Zentrale, auf die über entsprechende Kommunikationseinrichtungen, beispielsweise Mobilfunknetz, zugegriffen werden kann, gespeichert wurden. Die Generierung der Lexika im 'Off-Line-Editiermodus' ist nur sinnvoll, wenn genügend Speicherplatz auf der mindestens einen Datenbasis vorhanden ist, und bietet sich besonders für Lexika an, welche besonders häufig benötigt werden. Als Datenbasis für die Zieldatei bietet sich besonders eine CD-Rom oder eine externe Datenbank an, da dadurch die Zieldatei immer auf dem aktuellsten Stand gehalten werden kann. Im Augenblick sind noch nicht alle möglichen Ortsnamen der Bundesrepublik Deutschland digitalisiert und auf einer Datenbasis abgelegt. Desgleichen ist nicht für alle Orte eine entsprechende Straßenliste vorhanden. Deshalb ist es wichtig, die Datengrundlage jederzeit aktualisieren zu können. Als Datenbasis für das mindestens eine im 'Off-Line-Editiermodus' generierte Lexikon kann auch ein interner nicht flüchtiger Speicherbereich des Zielführungssystems benutzt werden.

Um die Spracheingabe einer gewünschten Zieladresse an das Zielführungssystem schneller durchführen zu können, wird nach der Initialisierungsphase des Zielführungssystems bzw. bei einem genügend großen nicht flüchtigen internen Speicherbereich nach jedem Wechsel der Datenbasis, ein Grundvokabular geladen, welches wenigstens ein aus der Zieldatei generiertes Grund-Lexikon umfaßt. Die Generierung dieses Grund-Lexikons kann bereits im 'Off-Line-Editiermodus' erfolgt sein. Das Grund-Lexikon kann zusätzlich zu der Zieldatei auf der Datenbasis gespeichert sein oder im nicht flüchtigen internen Speicherbereich des Zielführungssystems abgelegt sein. Als Alternative kann die Generierung des Grund-Lexikons erst nach der Initialisierungsphase erfolgen. Das dynamische Generieren von Lexika während des Echtzeitbetriebs des Zielführungssystems, d.h. während der Laufzeit, bringt zwei wesentliche Vorteile mit sich. Zum einen besteht dadurch die Möglichkeit beliebige Lexika aus der auf der mindestens einen Datenbasis abgelegten Datengrundlage zusammenzustellen und zum zweiten spart man erheblichen Speicherplatz auf der mindestens einen Datenbasis, da nicht alle für die verschiedenen Eingabedialoge benötigten Lexika auf der mindestens einen Datenbasis vor der Aktivierung des Spracherkenners abgelegt sein müssen.

Bei der nachfolgend beschriebenen Ausführungsform umfaßt das Grundvokabular zwei im 'Off-Line-Editiermodus' generierte und auf der mindestens einen Datenbasis gespeicherte Lexika und zwei Lexika, welche nach der Initialisierungsphase generiert werden. Besitzt die Spracherkennungseinrichtung genügend Arbeitsspeicher, so wird das Grundvokabular nach der Initialisierungsphase zusätzlich zu den zulässigen Sprachkommandos für das Sprachdialogsystem gemäß der WO-A-97 10 583 in die Spracherkennungseinrichtung geladen. Das Sprachdialogsystem erlaubt dann nach der Initialisierungsphase und dem Betätigen der PTT-Taste die Eingabe von verschiedenen Informationen mit der Absicht die an das Sprachdialogsystem angeschlossenen Geräte zu steuern sowie die Grundfunktionen eines Zielführungssystems zu bedienen und einen Zielort und/oder eine Straße als Zieladresse für das Zielführungssystem einzugeben. Besitzt die Spracherkennungseinrichtung zu wenig Arbeitsspeicher so wird das Grundvokabular erst in die Spracherkennungseinrichtung geladen, wenn eine entsprechende Bedienfunktion, welche auf das Grundvokabular zurückgreift, aktiviert wurde. Das auf der mindestens einen Datenbasis gespeichertes Grund-Lexikon umfaßt die 'p' größten Städte der Bundesrepublik Deutschland, wobei der Parameter 'p' bei der beschriebenen Ausführung auf 1000 gesetzt ist. Damit werden ca. 53 Mio. Bundesbürger oder 65% der Bevölkerung direkt erfaßt. Das Grund-Lexikon umfaßt alle Orte mit mehr als 15.000 Einwohnern. Ein ebenfalls auf der Datenbasis gespeichertes Region-Lexikon umfaßt 'z' Namen von Regionen und Gebieten wie z.B. Bodensee, Schwäbische Alb usw., wobei bei der beschriebenen Ausführung das Region-Lexikon ca. 100 Namen umfaßt. Das Region-Lexikon dient zur Erfassung von bekannten Gebieten und gebräuchlichen Regionsnamen. Hinter diesen Namen verstecken sich Zusammenfassungen von Ortsnamen, die nach dem Einsprechen des Gebiets- oder Regionsnamens als neues Gebiets-Lexikon generiert und geladen werden können. Ein Umgebungs-Lexikon, welches erst nach der Initialisierung generiert wird, umfaßt 'a' dynamisch nachgeladene Ortsnamen rund um den aktuellen Fahrzeugstandort, dadurch können auch kleinere Orte in der unmittelbaren Umgebung direkt angesprochen werden, wobei der Parameter 'a' bei der beschriebenen Ausführungsform auf 400 gesetzt ist. Dieses Umgebungs-Lexikon wird auch während der Fahrt in bestimmten Abständen immer wieder aktualisiert, damit es immer möglich ist, Orte in der unmittelbaren Umgebung direkt einzusprechen. Der aktuelle Fahrzeugstandort wird dem Zielführungssystem von einem aus dem Stand der Technik bekannten Ortungsverfahren, beispielsweise mittels einem Global Positioning System (GPS), mitgeteilt. Die bisher beschriebenen Lexika sind dem sprecherunabhängigen Spacherkenner zugeordnet. Ein Namen-Lexikon, welches nicht aus der Zieldatei generiert wird und dem sprecherabhängigen Spracherkenner zugeordnet ist, umfaßt ca. 150 vom Benutzer gesprochene Schlüsselworte aus dem persönlichen Adreßregister des Benutzers. Jedem Schlüsselwort wird dabei mittels dem Eingabedialog 'Adresse speichern' eine bestimmte Zieladresse aus der Zieldatei zugeordnet. Diese bestimmte Zieladresse wird durch die Spracheingabe des zugeordneten Schlüsselworts mittels dem Eingabedialog 'Adresse abrufen' an das Zielführungssystem übergeben. Damit ergibt sich ein Grundvokabular von ca. 1650 Wörtern, die der Spracherkennungseinrichtung bekannt sind und als isoliert gesprochenes Wort (Ortsnamen, Straßennamen, Schlüsselwort) eingegeben werden können.

Zusätzlich kann vorgesehen werden, Adressen aus einer externen Datenquelle, beispielsweise einem persönlichen elektronischen Datensystem oder einem tragbaren Kleinrechner (Laptop), mittels einer Datenübertragung an das Sprachdialogsystem bzw. an das Zielführungssystem zu übertragen und als Adressen-Lexikon in das Grundvokabular zu integrieren. Normalerweise sind auf den externen Datenquellen keine phonetischen Beschreibungen für die Adreßdaten (Namen, Zielort, Straße) abgelegt. Um diese Daten trotzdem in das Vokabular für eine Spracherkennungseinrichtung übernehmen zu können, muß eine automatische phonetische Transkription dieser Adreßdaten, insbesondere der Namen durchgeführt werden. Über eine Tabelle wird anschließend eine Zuweisung zum richtigen Zielort realisiert.

Für die im folgenden beschriebenen Dialogbeispiele muß auf der mindestens einen Datenbasis des Zielführungssystems eine Zieldatei abgelegt werden, welche für jeden im Zielführungssystem erfaßten Ort einen Datensatz gemäß Tabelle 1 enthält. Je nach Speicherplatz und Verfügbarkeit können von den angegebenen Informationen auch Teile fehlen. Dies betrifft aber nur Daten, die zur Auflösung von Mehrdeutigkeiten herangezogen werden wie z.B. Namenszusatz, Kreiszugehörigkeit, Vorwahlnummern usw.. Werden Adreßdaten von einer externen Datenquelle verwendet, so müssen die Adreßdaten entsprechend ergänzt werden. Von besonderer Bedeutung sind die Wortuntereinheiten für die Spracherkennungseinrichtung, welche als Hidden-Markov- Model-Spracherkenner arbeitet (HMM-Erkenner)

**Tabelle 1**

| **Beschreibung des Eintrags** | **Beispiel** |
|---|---|
| Ortsnamen | Flensburg |
| Politische Zugehörigkeit bzw. Namenszusatz | - |
| Postleitzahl bzw. Postleitzahlenbereich | 24900 - 24999 |
| Vorwahlnummer | 0461 |
| Stadt- bzw. Landkreiszugehörigkeit | Flensburg, Stadtkreis |
| Bundesland | Schleswig-Holstein |
| Einwohnerzahl | 87526 |
| Geographische Codierung | 9.43677, 54.78204 |
| Phonetische Beschreibung | \|fl'Ens\|bUrk\| |
| Wortuntereinheiten für den HMM-Spracherkenner | f[LN]le E[LN] n[C] s b[Vb] U[Vb]r k. bzw. 101 79 124 117 12 39 35 82 68 |
| Lexikonzugehörigkeit | 3, 4, 78 ... |

Die Erfindung ist im Folgenden anhand von Ausführungsbeispielen in Verbindung mit den Zeichnungen näher erläutert. Es zeigen:
Fig. 1: in schematischer Darstellung eine Übersicht über die möglichen Eingabedialoge zur Spracheingabe einer Zieladresse für ein Zielführungssystem;
Fig. 2: in schematischer Darstellung ein Ablaufdiagramm eines ersten Ausführungsbeispiels für den Eingabedialog 'Zielorteingabe';
Fig. 3: in schematischer Darstellung ein Ablaufdiagramm eines zweiten Ausführungsbeispiels für den Eingabedialog 'Zielorteingabe';
Fig. 4: in schematischer Darstellung ein Ablaufdiagramm für den Eingabedialog 'Aus Liste auswählen';
Fig. 5: in schematischer Darstellung ein Ablaufdiagramm für den Eingabedialog 'Mehrdeutigkeit auflösen';
Fig. 6: in schematischer Darstellung ein Ablaufdiagramm für den Eingabedialog 'Zielort buchstabieren';
Fig. 7: in schematischer Darstellung ein Ablaufdiagramm für den Eingabedialog 'Grobzieleingabe';
Fig. 8: in schematischer Darstellung ein Ablaufdiagramm für den Eingabedialog 'Adresse speichern';
Fig. 9: in schematischer Darstellung ein Ablaufdiagramm für den Eingabedialog 'Straßeneingabe';
Fig. 10: in schematischer Darstellung ein Blockschaltbild einer Vorrichtung zur Durchführung des erfindungsgemäßen Verfahrens.

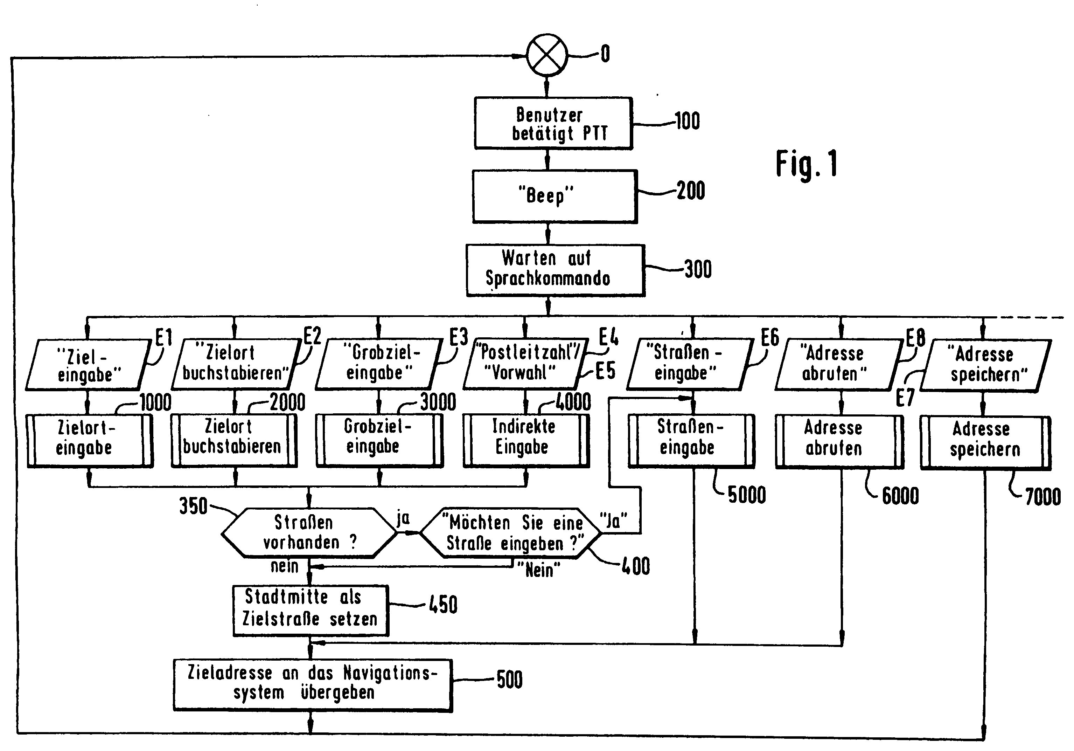

Fig. 1 zeigt eine Übersicht über die möglichen Eingabedialoge zur Spracheingabe einer Zieladresse für ein Zielführungssystem. Ein Sprachdialog zwischen einem Benutzer und einem Sprachdialogsystem gemäß Fig. 1 beginnt nach der Initialisierungsphase mit einem Wartezustand 0, indem das Sprachdialogsystem verbleibt, bis die PTT-Taste (Push-to-Talk-Taste) betätigt wird und in den das Sprachdialogsystem nach Beendigung des Sprachdialogs zurückkehrt. Der Benutzer aktiviert das Sprachdialogsystem durch Betätigen der PTT-Taste im Schritt 100. Das Sprachdialogsystem antwortet im Schritt 200 mit einer akustischen Ausgabe, beispielsweise durch einen Signalton oder durch eine Sprachausgabe, welche dem Benutzer anzeigt, daß das Sprachdialogsystem bereit ist ein Sprachkommando entgegenzunehmen. Im Schritt 300 wartet das Sprachdialogsystem nun auf ein zulässiges Sprachkommando, um mittels einer Dialog- und Ablaufsteuerung die verschiedenen mit dem Sprachdialogsystem verbundenen Geräte zu steuern oder einen entsprechenden Eingabedialog zu starten. Im Einzelnen wird hier aber nur auf die zulässigen Sprachkommandos näher eingegangen, welche das Zielführungssystem betreffen. Es können an dieser Stelle folgende, die verschiedenen Eingabedialoge des Zielführungssystem betreffenden Sprachkommandos eingegeben werden:
- "Zielorteingabe" E1: Durch dieses Sprachkommando wird der Eingabedialog 'Zielorteingabe' aktiviert.
- "Zielort buchstabieren" E2: Durch dieses Sprachkommando wird der Eingabedialog 'Zielort buchstabieren' aktiviert.
- "Grobzieleingabe" E3: Durch dieses Sprachkommando wird der Eingabedialog 'Grobzieleingabe' aktiviert.
- "Postleitzahl" E4 oder "Ortsnetzkennzahl" E5: Durch diese beiden Sprachkommandos wird der Eingabedialog 'Indirekte Eingabe' aktiviert.
- "Straßeneingabe" E6: Durch dieses Sprachkommando wird der Eingabedialog 'Straßeneingabe' aktiviert.
- "Adresse speichern" E7: Durch dieses Sprachkommando wird der Eingabedialog 'Adresse speichern' aktiviert.
- "Adresse abrufen" E8: Durch dieses Sprachkommando wird der Eingabedialog 'Adresse abrufen' aktiviert.

Anstelle der ober angegebenen können natürlich auch andere Begriffe zur Aktivierung der verschiedenen Eingabedialoge verwendet werden. Zusätzlich zu den ober angegebenen Sprachkommandos können auch allgemeine Sprachkommandos zur Steuerung des Zielführungssystems, beispielsweise "Zielführungsinformation", "Zielführung start/stop" usw., eingegeben werden.

Nach dem Starten eines Eingabedialogs durch das Sprechen des entsprechenden Sprachkommandos werden die entsprechenden Lexika als Vokabular in die Spracherkennungseinrichtung geladen. Bei einer erfolgreich durchgeführten Spracheingabe des Zielortes als Teil der Zieladresseneingabe mittels einem der Eingabedialoge 'Zielorteingabe' im Schritt 1000, 'Zielort buchstabieren' im Schritt 2000, 'Grobzieleingabe' im Schritt 3000 oder 'Indirekte Eingabe' im Schritt 4000 wird anschließend im Schritt 350 überprüft, ob für den erkannten Zielort eine entsprechende Straßenliste vorhanden ist oder nicht. Ergibt die Überprüfung ein negatives Ergebnis, dann wird zum Schritt 450 verzweigt. Gelangt die Überprüfung zu einem positiven Ergebnis, so wird im Schritt 400 abgefragt, ob der Benutzer einen Straßennamen eingeben will oder nicht. Beantwortet der Benutzer die Abfrage 400 mit "Ja", so wird der Eingabedialog 'Straßeneingabe' aufgerufen. Beantwortet der Benutzer die Abfrage 400 mit "Nein" so wird zum Schritt 450 verzweigt. Die Abfrage 400 wird also nur dann durchgeführt, wenn für den entsprechenden Zielort auch die Straßennamen im Zielführungssystem erfaßt sind. Im Schritt 450 wird der erkannte gewünschte Zielort automatisch durch die Angabe Zentrum, oder Stadtmitte als Straßeneingabe ergänzt, da an das Zielführungssystem nur eine vollständige Zieladresse übergeben werden kann, wobei die Zieladresse neben dem Zielort auch eine Straße oder ein Sonderziel, beispielsweise Bahnhof, Flughafen, Stadtmitte usw., umfaßt. Im Schritt 500 wird die Zieladresse an das Zielführungssystem übergeben. Anschließend wird der Sprachdialog beendet und das Sprachdialogsystem kehrt in den Wartezustand 0 zurück. Wurde zu Beginn des Sprachdialogs im Schritt 300 das Sprachkommando "Straßeneingabe" E6 vom Benutzer gesprochen und von der Spracherkennungseinrichtung erkannt, dann wird im Schritt 5000 der Eingabedialog 'Straßeneingabe' aktiviert. Anschließend wird nach der erfolgreichen Eingabe des gewünschten Zielortes und der Straße, die Zieladresse im Schritt 500 an das Zielführungssystem übergeben. Wurde zu Beginn des Sprachdialogs im Schritt 300 das Sprachkommando "Adresse abrufen" E8 vom Benutzer gesprochen und von der Spracherkennungseinrichtung erkannt, dann wird im Schritt 6000 der Eingabedialog 'Adresse abrufen' aktiviert. Im Eingabedialog 'Adresse abrufen' wird ein Schlüsselwort durch den Benutzer gesprochen und die dem gesprochenen Schlüsselwort zugeordnete Adresse wird im Schritt 500 als Zieladresse dem Zielführungssystem übergeben. Wurde zu Beginn des Sprachdialogs im Schritt 300 das Sprachkommando "Adresse speichern" E7 vom Benutzer gesprochen und von der Spracherkennungseinrichtung erkannt, dann wird im Schritt 7000 der Eingabedialog 'Adresse speichern' aktiviert. Mittels dem Eingabedialog 'Adresse speichern' wird eine eingegebene Zieladresse unter einem vom Benutzer gesprochenen Schlüsselwort im persönlichen Adreßregister abgelegt. Anschließend wird der Eingabedialog 'Adresse abrufen' beendet und das System kehrt in den Wartezustand 0 zurück.

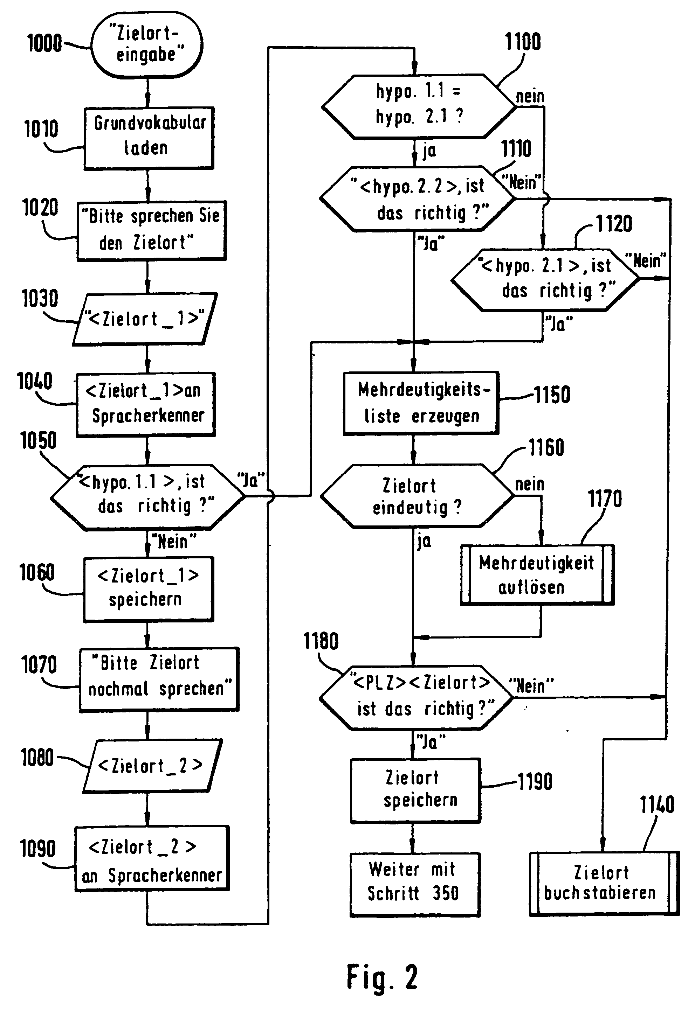

Die Fig. 2 zeigt in schematischer Darstellung eine erste Ausführungsform des Eingabedialogs 'Zielorteingabe'. Nach der Aktivierung des Eingabedialogs 'Zielorteingabe' im Schritt 1000 durch das im Schritt 300 vom Benutzer gesprochene und von der Spracherkennungseinrichtung erkannte Sprachkommando "Zielorteingabe" E1 wird, wie aus der Fig. 2 ersichtlich ist, im Schritt 1010 das Grundvokabular in die Spracherkennungseinrichtung geladen. Das Laden des Grundvokabulars in die Spracherkennungseinrichtung kann grundsätzlich auch an einer anderen Stelle, beispielsweise nach der Initialisierungsphase oder nach der Betätigung der PTT-Taste, erfolgen. Dies ist von der Geschwindigkeit des Ladevorgangs abhängig und von der Art der verwendeten Spracherkennungseinrichtung. Anschließend wird im Schritt 1020 der Benutzer aufgefordert einen Zielort einzugeben. Der Benutzer gibt im Schritt 1030 mittels Spracheingabe den gewünschten Zielort ein. Diese Spracheingabe wird im Schritt 1040 als akustischer Wert <Zielort_1> an die Spracherkennungseinrichtung übergeben und dort mit dem geladenen Grundvokabular verglichen, wobei als akustischer Wert Abtastwerte im Zeit- oder Frequenzbereich oder Merkmalsvektoren an die Spracherkennungseinrichtung übergeben werden können. Die Art des übergebenen akustischen Wert ist ebenfalls von der Art des verwendeten Spracherkenners abhängig. Als Ergebnis liefert der Spracherkenner eine erste Hypothesenliste hypo.1 mit Ortsnamen, welche nach Erkennungwahrscheinlichkeit sortiert sind. Enthält die Hypothesenliste hypo.1 homophone Ortsnamen, d. h. Ortsnamen, welche identisch ausgesprochen, aber unterschiedlich geschrieben werden, beispielsweise Ahlen und Aalen, so erhalten beide Ortsnamen die gleiche Erkennungswahrscheinlichkeit und beide Ortsnamen werden bei der Fortsetzung des Eingabedialogs berücksichtigt. Anschließend wird im Schritt 1050 der Ortsname mit der größten Erkennungswahrscheinlichkeit als Sprachausgabe <hypo.1.1> an den Benutzer mit der Frage ausgegeben, ob <hypo.1.1> dem gewünschten eingegebenen Zielort <Zielort_1> entspricht oder nicht. Hier ist es noch unerheblich, ob an der ersten Stelle der Hypothesenliste mehrere Einträge stehen oder nicht, da die Ortsnamen identisch gesprochen werden. Wird die Abfrage 1050 mit "Ja" beantwortet, so wird zum Schritt 1150 gesprungen. Beantwortet der Benutzer die Frage mit "Nein" so wird der akustische Wert <Zielort_1> des eingegebenen Zielortes im Schritt 1060 für einen eventuellen späteren Erkennungsvorgang mit einem anderen Lexikon gespeichert. Anschließend wird der Benutzer im Schritt 1070 aufgefordert den Zielort nochmals zu sprechen. Der Benutzer gibt im Schritt 1080 mittels Spracheingabe den Zielort nochmals ein. Diese Spracheingabe wird im Schritt 1090 als akustischer Wert <Zielort_2> an die Spracherkennungseinrichtung übergeben und dort mit dem geladenen Grundvokabular verglichen. Als Ergebnis liefert die Spracherkennungseinrichtung eine zweite Hypothesenliste hypo.2 mit Ortsnamen, welche nach Erkennungwahrscheinlichkeit sortiert sind. Im Schritt 1100 wird überprüft, ob der ASCII-Wert des Ortsnamens, bzw. bei homophonen Ortsnamen die ASCII-Werte der Ortsnamen, mit der größten Erkennungswahrscheinlichkeit hypo.1.1 der Hypothesenliste hypo.1 mit dem ASCII-Wert des Ortsnamen, bzw. bei homophonen Ortsnamen die ASCII-Werte der Ortsnamen, mit der größten Erkennungswahrscheinlichkeit hypo.2.1 übereinstimmt bzw übereinstimmen. Ist dies der Fall, so wird im Schritt 1110 der Ortsnamen mit der zweitgrößten Erkennungswahrscheinlichkeit aus der zweiten Hypothesenliste hypo.2 als Sprachausgabe <hypo.2.2> mit der Frage an den Benutzer ausgegeben, ob <hypo.2.2> der gewünschte Zielort ist oder nicht. Gelangt die Überprüfung 1100 zu einem negativen Ergebnis, so wird im Schritt 1120 der Ortsname mit der größten Erkennungswahrscheinlichkeit aus der zweiten Hypothesenliste hypo.2 als Sprachausgabe <hypo.2.1> an den Benutzer mit der Frage ausgegeben, ob <hypo.2.1> der gewünschte Zielort ist oder nicht. Ergibt die Antwort des Benutzers, daß der gewünschte Zielort immer noch nicht erkannt wurde, so wird im Schritt 1140 der Eingabedialog 'Zielort buchstabieren' aufgerufen. Ergibt die Antwort des Benutzers, daß ein Zielort erkannt wurde, so wird im Schritt 1150, zum Schritt 1150 gelangt man auch, wenn die Abfrage 1050 mit "Ja" beantwortet wurde, der ASCII-Wert des erkannten Zielorts, bzw. bei homophonen Ortsnamen die ASCII-Werte der erkannten Ortsnamen, (entweder hypo.1.1, hypo.2.1 oder hypo.2.2) mit den ASCII-Werten der in den Datensätzen der Zieldatei gespeicherten Ortsnamen verglichen. Aus allen Ortsnamen in denen einer der erkannten Zielorte in der Orthographie ganz enthalten ist wird dann eine Mehrdeutigkeitsliste erzeugt. Bei homophonen Ortsnamen enthält die Mehrdeutigkeitsliste immer mehrere Einträge, und das Ergebnis ist deshalb nicht eindeutig.

Es kann an dieser Stelle aber auch bei nicht homophonen Ortsnamen zu einer Mehrdeutigkeitsliste mit mehreren Einträgen, dem sogenannten "Neustadt-Problem", kommen, wenn die orthographische Schreibweise des eingegebenen Zielorts mehrfach in der Zieldatei vorhanden ist. Deshalb wird im Schritt 1160 überprüft, ob der Zielort eindeutig erkannt wurde oder nicht. Ist der Zielort nicht eindeutig, so wird zum Schritt 1170 verzweigt. Dort wird ein achter Eingabedialog, im weiteren 'Mehrdeutigkeit auflösen' genannt, aufgerufen. Ist der Zielort eindeutig, so wird durch die Sprachausgabe im Schritt 1180 der gefundene Zielort mit bestimmten Zusatzinformationen, beispielsweise Postleitzahl, Ortsname und Bundesland, mit der Frage an den Benutzer ausgegeben, ob es sich um den gewünschten Zielort handelt oder nicht. Beantwortet der Benutzer die Frage mit "Nein", so wird zum Schritt 1140, welcher den Eingabedialog 'Zielort buchstabieren' aufruft, verzweigt. Beantwortet der Benutzer die Frage mit "Ja" so wird im Schritt 1190 der Zielort zwischengespeichert und zum Schritt 350 (siehe Beschreibung zu Fig. 1) gesprungen.

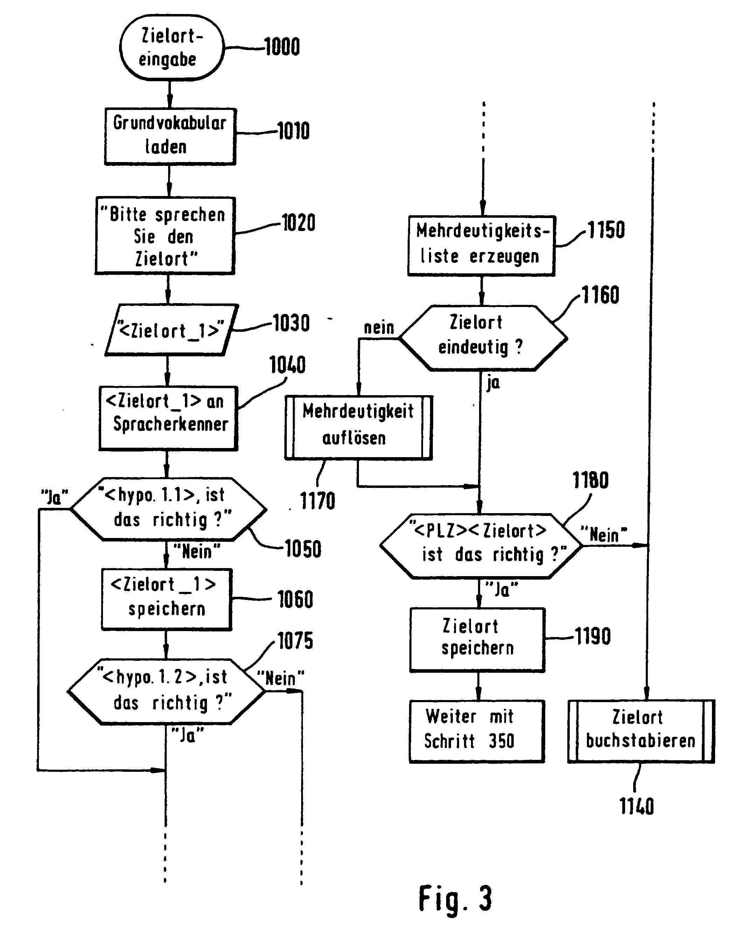

Die Fig. 3 zeigt in schematischer Darstellung eine zweite Ausführungsform des Eingabedialogs 'Zielorteingabe'. Die Verfahrensschritte 1000 bis 1060 wurden bereits in der Beschreibung zur Fig. 2 abgehandelt. Im Unterschied zur ersten Ausführungsform des Eingabedialogs wird nach dem Schritt 1060 der Eingabedialog 'Zielorteingabe' mit dem Schritt 1075 und nicht mit dem Schritt 1070 fortgesetzt. Im Schritt 1075 wird der Ortsnamen mit der zweitgrößten Erkennungswahrscheinlichkeit der ersten Hypothesenliste hypo.1 als Sprachausgabe <hypo.1.2> mit der Frage an den Benutzer ausgegeben, ob <hypo.1.2> dem gewünschten eingegebenen Zielort <Zielort_1> entspricht oder nicht. Wird die Abfrage 1075 mit "Ja" beantwortet, so wird zum Schritt 1150 gesprungen. Beantwortet der Benutzer die Frage mit "Nein" so wird zum Schritt 1140 verzweigt. Im Schritt 1140 wird der Eingabedialog 'Zielort buchstabieren' aufgerufen. Die Verfahrensschritte ab Schritt 1150 wurden bereits in der Beschreibung zur Fig. 2 abgehandelt und werden deshalb hier nicht mehr beschrieben.

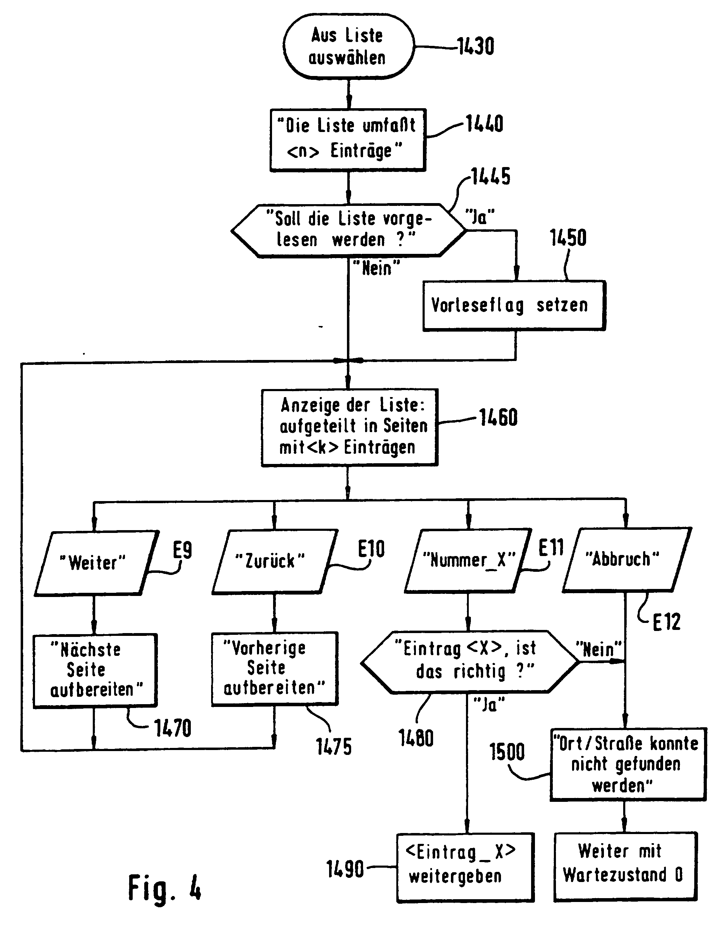

Fig. 4 zeigt in schematischer Darstellung eine Ausführungsform eines Ablaufdiagramms für einen achten Eingabedialog, im weiteren 'Aus Liste auswählen' genannt, zur Auswahl eines Eintrags aus einer Liste. Nach der Aktivierung des Eingabedialogs 'Aus Liste auswählen' im Schritt 1430 durch einen anderen Eingabedialog wird der Benutzer im Schritt 1440 über die Anzahl der Einträge in der Liste informiert und im Schritt 1445 gefragt, ob die Liste vorgelesen werden soll oder nicht. Beantwortet der Benutzer die Frage mit "Ja" so wird im Schritt 1450 ein Vorleseflag gesetzt und anschließend zum Schritt 1460 verzweigt. Beantwortet der Benutzer die Frage mit "Nein", so wird der Ablauf direkt mit dem Schritt 1460 fortgeführt. Im Schritt 1460 wird dem Benutzer die Liste mit der Aufforderung angezeigt, einen Eintrag von der Liste auszuwählen, wobei die Anzeige der Liste bei nicht gesetztem Vorleseflag nur auf einer Anzeigeeinrichtung des Zielführungssystems erfolgt. Ist das Vorleseflag gesetzt wird die Liste zusätzlich mittels Sprachausgabe vorgelesen. Die Liste wird dabei in Seiten aufgeteilt, die beispielsweise bis zu vier Einträge umfassen, wobei die Einträge auf jeder Seite wieder fortlaufend beginnend mit eins durchnumerieret werden. Im Schritt 1460 kann der Benutzer verschiedene Sprachkommandos zur Weiterführung des Eingabedialogs sprechen. Mit einem ersten Sprachkommando E9, beispielsweise "weiter", kann der Benutzer im Schritt 1470 zur nächsten Seite der Liste umblättern und anschließend zum Schritt 1460 zurückkehren. Mit einem zweiten Sprachkommando E10, beispielsweise "zurück", kann der Benutzer im Schritt 1475 zur vorherigen Seite der Liste zurückblättern und ebenfalls zum Schritt 1460 zurückkehren. Mit einem dritten Sprachkommando E11, beispielsweise "Nummer X", kann der Benutzer einen bestimmten Eintrag aus der Liste auswählen, wobei X für die Nummer des gewünschten Eintrags steht. Nach dem Sprechen des dritten Sprachkommandos E11 wird zum Schritt 1480 verzweigt. Mit einem vierten Sprachkommando E12, beispielsweise "Abbruch" kann der Benutzer, wenn er beispielsweise den gewünschten Eintrag nicht gefunden hat, den Eingabedialog 'Aus Liste auswählen' beenden. Deshalb wird nach Eingabe des vierten Sprachkommandos zum Schritt 1500 verzweigt. Im Schritt 1500 wird abhängig davon, ob die Einträge in der Liste aus Straßennamen oder Ortsnamen bestehen, der Benutzer durch eine Sprachausgabe darüber informiert, daß der Straßenname bzw. der Ortsname nicht gefunden werden konnte. Anschließend kehrt das System in den Wartezustand 0 zurück. Im Schritt 1480 wird durch eine Abfrage an den Benutzer nochmals überprüft, ob der <Eintrag_X> richtig ist oder nicht. Um die Auswahl des gewünschten Eintrages aus der Liste komfortabler zu gestalten, kann auch vorgesehen werden, daß die entsprechende Liste als Listen-Lexikon generiert und in die Spracherkennungseinrichtung geladen wird. Dadurch kann der Benutzer die Auswahl des Eintrags wie oben beschrieben durch die Sprechen der entsprechenden Nummer als drittes Sprachkommando E11 durchführen oder er kann den entsprechenden Eintrag von der Liste ablesen und als drittes Sprachkommando E11 eingeben. In der Liste steht beispielsweise der gewünschte Eintrag: 4. Neustadt an der Weinstraße, so kann der Benutzer entweder "Nummer 4" oder "Neustadt an der Weinstraße" als drittes Sprachkommando E11 sprechen und das System erkennt in beiden Fällen den gewünschten Eintrag. Beantwortet der Benutzer die Abfrage 1480 mit "Ja" so wird im Schritt 1490 der Eingabedialog 'Aus Liste auswählen' beendet und der ausgewählte 'Eintrag_X' als Ergebnis an den aufrufenden Eingabedialog übergeben. Beantwortet der Benutzer die Abfrage 1480 mit "Nein", so wird zum Schritt 1500 verzweigt.

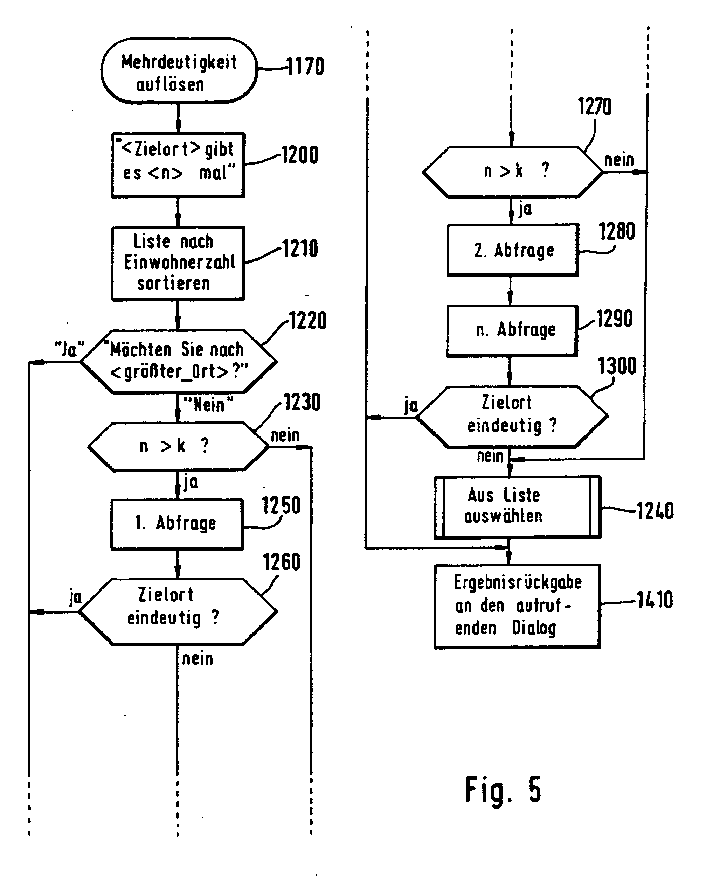

Fig. 5 zeigt in schematischer Darstellung eine Ausführungsform eines Ablaufdiagramms für einen neunten Eingabedialog, im weiteren 'Mehrdeutigkeit auflösen' genannt, zur Auflösung von Mehrdeutigkeiten, beispielsweise für das sogenannte "Neustadt-Problem" oder für homophone Ortsnamen. Nach dem Aktivieren des Eingabedialogs 'Mehrdeutigkeit auflösen' im Schritt 1170 durch einen anderen Eingabedialog wird der Benutzer im Schritt 1200 darüber informiert, wieviele Ortsnamen in der Mehrdeutigkeitsliste eingetragen sind. Anschließend wird im Schritt 1210 der Ort mit der größten Einwohnerzahl gesucht und im Schritt 1220 als akustischer Wert <größter_Ort> mit der Abfrage ausgegeben, ob der Benutzer <größter_Ort> als Zielort wünscht oder nicht. Beantwortet der Benutzer die Abfrage 1220 mit "Ja" so wird zum Schritt 1410 gesprungen. Im Schritt 1410 wird 'größter_Ort' als Ergebnis an den aufrufenden Eingabedialog übergeben und der Eingabedialog 'Mehrdeutigkeit auflösen' beendet. Beantwortet der Benutzer die Abfrage 1220 mit "Nein", so wird im Schritt 1230 überprüft, ob die Mehrdeutigkeitsliste mehr als k Einträge umfaßt oder nicht. Umfaßt die Mehrdeutigkeitsliste k oder weniger Einträge so wird im Schritt 1240 der Eingabedialog 'Aus Liste auswählen' aufgerufen. Der Parameter k sollte nicht zu groß gewählt werden, da sonst der Eingabedialog 'Aus Liste auswählen' zu lange dauert. Als günstiger Wert hat sich bei der Erprobung k = 5 erwiesen. Ergibt die Überprüfung 1230 ein positives Ergebnis, so wird im Schritt 1250 mit einem ersten Abfragedialog versucht, die Anzahl der Einträge in die Mehrdeutigkeitsliste zu verkleinern. Nach dem ersten Abfragedialog wird im Schritt 1260 überprüft, ob der Zielort eindeutig ist oder nicht. Kommt die Überprüfung 1260 zu einem positiven Ergebnis, dann wird zum Schritt 1410 verzweigt, kommt die Überprüfung 1260 zu einem negativen Ergebnis so wird analog zum Schritt 1230 im Schritt 1270 überprüft ob die Mehrdeutigkeitsliste mehr als k Einträge umfaßt oder nicht. Umfaßt die Mehrdeutigkeitsliste k oder weniger Einträge so wird zum Schritt 1240 verzweigt, umfaßt die Mehrdeutigkeitsliste mehr als k Einträge, so wird mit einem zweiten Abfragedialog im Schritt 1280 versucht die Anzahl der Einträge in der Mehrdeutigkeitsliste zu verkleinern. Die beschriebenen Vorgänge wiederholen sich bis zu einem n-ten Abfragedialog im Schritt 1290. Nach dem n-ten Abfragedialog wird im Schritt 1300 analog zum Schritt 1260 überprüft ob der Zielort eindeutig ist oder nicht. Ist der Zielort eindeutig, so wird zum Schritt 1410 verzweigt, wenn nicht, dann wird zum Schritt 1240 verzweigt. Der im Schritt 1240 aufgerufene Eingabedialog 'Aus Liste auswählen' liefert als Ergebnis einen eindeutigen Zielort an den Einabedialog 'Mehrdeutigkeit auflösen' zurück. Im Schritt 1410 wird als Ergebnis des Eingabedialogs 'Mehrdeutigkeit auflösen' ein eindeutiger Zielort an den aufrufenden Eingabedialog weitergegeben und der Eingabedialog 'Mehrdeutigkeit auflösen' beendet. Als Abfragedialoge können beispielsweise die Abfragen nach der Postleitzahl, der Ortsnetzkennzahl, dem Bundesland oder der nächstgrößten Stadt verwendet werden. Die Abfragedialoge beginnen mit einer Überprüfung, ob die entsprechende Abfrage sinnvoll ist oder nicht. Befinden sich beispielsweise alle Ortsnamen auf der Mehrdeutigkeitsliste in einem Bundesland, so ist die Abfrage nach dem Bundesland sinnlos und der Bundesland-Abfragdialog wird beendet. Zur Bewertung ob eine Abfrage sinnvoll ist oder nicht können verschiedene Kriterien herangezogen werden. So kann beispielsweise ein absoluter Schwellwert, beispielsweise 8 Einträge besitzen das Abfragekriterium oder 80% der Einträge besitzen das Abfragekriterium, gewählt werden. Nach der Überprüfung, ob der aktivierte Abfragedialog sinnvoll ist oder nicht, wird die Abfrage an den Benutzer ausgegeben, beispielsweise "Kennen Sie das Bundesland in dem der Zielort liegt?" oder "Kennen Sie die Postleitzahl (bzw. Ortsnetzkennzahl, bzw, die nächstgrößte Stadt) des Zielortes?". Entsprechend der Antwort des Benutzers, wird dann der Eingabedialog fortgeführt. Kennt der Benutzer das Abfragekriterium nicht, so wird zur nächsten Abfrage verzweigt. Kennt der Benutzer das Abfragekriterium, so wird er aufgefordert eine Spracheingabe vorzunehmen. Bei der Bundeslandabfrage kann hierfür ein Bundesland-Lexikon, falls noch nicht vorhanden, generiert und als Vokabular in die Spracherkennungseinrichtung geladen werden. Neben der korrekten Bezeichnung der Bundesländer können auch gebräuchliche Abkürzungen, z. B. Württemberg statt Baden Württemberg, im Bundesland-Lexikon enthalten sein. Ergibt eine Abfrage keine Verkleinerung der Einträge in der Mehrdeutigkeitsliste, so wird die ursprüngliche Mehrdeutigkeitsliste für den weiteren Eingabedialog 'Mehrdeutigkeit auflösen' verwendet. Ergibt eine Abfrage eine Verkleinerung der Einträge in der Mehrdeutigkeitsliste, so wird die verkleinerte Mehrdeutigkeitsliste für den weiteren Eingabedialog 'Mehrdeutigkeit auflösen' verwendet. Besonders vorteilhaft ist es, wenn die Abfrage nach der Postleitzahl als erster Abfragedialog durchgeführt wird, da dieses Kriterium in den meisten Anwendungsfällen zu einem eindeutigen Ergebnis führt. Dies gilt auch für die Abfrage nach der Ortsnetzkennzahl.

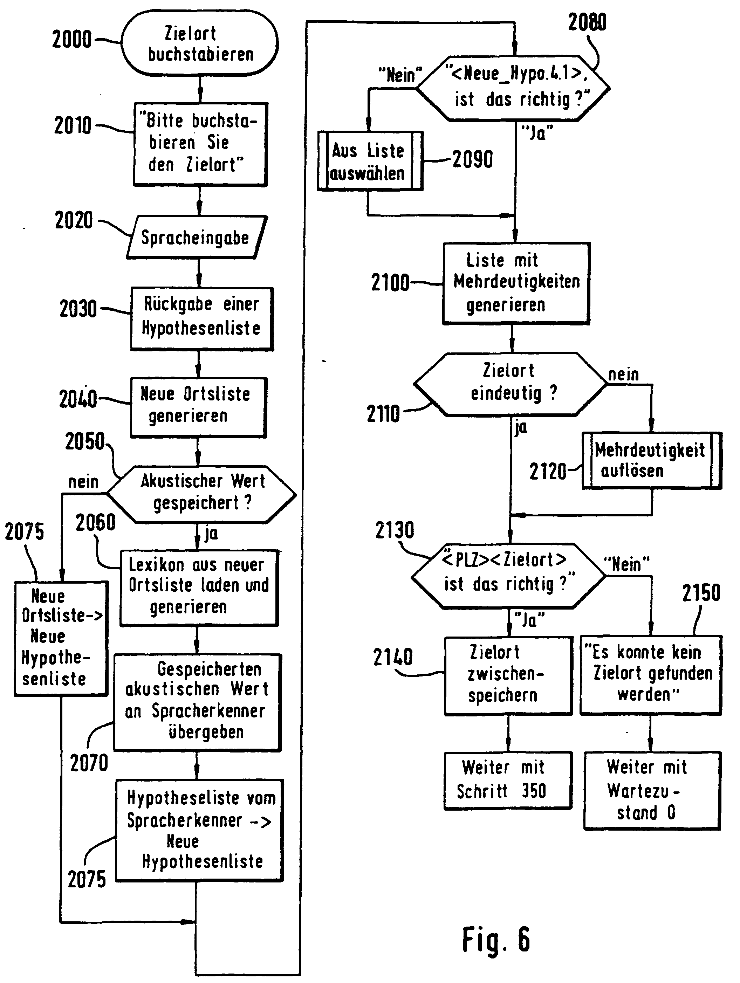

Fig. 6 zeigt in schematischer Darstellung eine Ausführungsform des Eingabedialogs 'Zielort buchstabieren'. Nach der Aktivierung des Eingabedialogs 'Zielort buchstabieren' im Schritt 2000 wird der Benutzer im Schritt 2010 aufgefordert den Zielort zu buchstabieren. Im Schritt 2020 erfolgt die Spracheingabe durch den Benutzer, wobei die Buchstaben des Zielorts am Stück oder in Buchstabengruppen, getrennt durch kurze Pausen, gesprochen werden können. Zusätzlich kann vorgesehen werden bestimmte Wortendungen wie -heim, -berg, -burg, -hausen, -tal usw. bzw. Wortanfänge wie Ober-, Unter-, Frei-, Neu-, Bad- usw. als Worteingabe zuzulassen, wobei die Wortanfänge und/oder die Wortendungen gemeinsam mit den zulässigen Buchstaben in einem Teilwort-Lexikon enthalten sind, wobei das Teilwort-Lexikon zu Beginn des Eingabedialogs 'Zielort buchstabieren' in den Spracherkenner geladen oder aktiviert wird. Die eingegebenen Wortanfänge, Buchstaben oder Wortendungen werden dem sprecherunabhängigen Spracherkenner zur Buchstabiererkennung zugeführt. Im Schritt 2030 wird als Ergebnis eine dritte Hypothesenliste hypo.3 mit Worten, welche aus den erkannten Buchstaben gebildet wurden, vom Spracherkenner zurückgegeben. Danach wird im Schritt 2040 die Hypothese mit der größten Erkennungswahrscheinlichkeit hypo.3.1 aus der dritten Hypothesenliste hypo.3 mit der Zieldatei abgeglichen. Als Ergebnis entsteht eine neue Ortsliste, welche ebenfalls nach Erkennungswahrscheinlichkeit sortiert ist. Anschließend wird durch den Schritt 2050 überprüft, ob ein akustischer Wert für den Zielort gespeichert ist oder nicht, d. h. es wird überprüft ob der Eingabedialog 'Zielort buchstabieren' von einem anderen Eingabedialog, beispielsweise 'Zielorteingabe', aufgerufen wurde oder nicht. Ist kein akustischer Wert des Zielorts vorhanden, so wird im Schritt 2075 die neue Ortsliste als vierte Hypothesenliste hypo.4 zur Weiterführung des Eingabedialogs übernommen und es wird zum Schritt 2080 gesprungen. Liefert die Abfrage 2050 ein positives Ergebnis, so wird im Schritt 2060 aus der neuen Ortsliste ein Ganzwort-Lexikon generiert und zur Ganzworterkennung in die Spracherkennungseinrichtung geladen. Dort wird anschließend im Schritt 2070 der gespeicherte akustische Wert des gewünschten Zielortes mit dem aus der Ortsliste generierten Ganzwort-Lexikon verglichen. Der Spracherkennungseinrichtung liefert als Ergebnis im Schritt 2075 eine nach der Erkennungswahrscheinlichkeit sortierte vierte Hypothesenliste hypo.4. Diese vierte Hypothesenliste hypo.4 wird zur Weiterführung des Eingabedialogs übernommen und es wird der Schritt 2080 durchgeführt. Im Schritt 2080 wird die Hypothese mit der größten Erkennungswahrscheinlichkeit hypo.4.1 aus der vierten Hypothesenliste hypo.4 mit der Abfrage an den Benutzer ausgegeben, ob die Hypothese hypo.4.1 dem gewünschten Zielort entspricht oder nicht. Beantwortet der Benutzer die Abfrage mit "Nein", so wird im Schritt 2090 der Eingabedialog 'Aus Liste auswählen' aufgerufen. Das Ergebnis des Eingabedialogs 'Aus Liste auswählen', bei welchem es sich um einen eindeutigen Zielort handelt, wird dann zur Durchführung des Schrittes 2100 benutzt. Im Schritt 2100 ermittelt das System aus der Zieldatei aller möglichen Orte eine Mehrdeutigkeitsliste, in welcher alle Orte aus der Zieldatei, welche in der Orthographie der Hypothese hypo.4.1 aus der vierten Hypothesenliste hypo.4 bzw. dem Ergebnis des Eingabedialogs 'Aus Liste auswählen' entsprechen, aufgenommen sind. Hier kann es nun vorkommen, daß der eingegebene Zielort in der Liste mehrfach vorkommt, beispielsweise aufgrund des "Neustadt-Problems", und somit nicht eindeutig ist. Deshalb wird im Schritt 2110 überprüft, ob der Zielort eindeutig ist oder nicht. Kommt der Zielort nur einmal vor, so wird der Eingabedialog mit dem Schritt 2130 fortgeführt. Ist der Zielort nicht eindeutig so wird gemäß Schritt 2120 der Eingabedialog 'Mehrdeutigkeit auflösen' aufgerufen. Das Ergebnis des Eingabedialogs 'Mehrdeutigkeit auflösen' wird danach an den Schritt 2130 übergeben. Im Schritt 2130 wird der Erkannte Zielort mit bestimmten Zusatzinformationen, beispielsweise Postleitzahl und Bundesland, verifiziert, in dem der Benutzer gefragt wird, ob der eingegebene Zielort richtig ist oder nicht. Beantwortet der Benutzer die Abfrage 2130 mit "Nein", so wird der Benutzer im Schritt 2150 darüber informiert, daß der Zielort nicht gefunden werden konnte und der Eingabedialog wird beendet. Beantwortet der Benutzer die Abfrage 2130 mit "Ja", so wird der erkannte Zielort im Schritt 2140 zwischengespeichert und zur Überprüfung 350 gemäß Fig. 1 verzweigt.

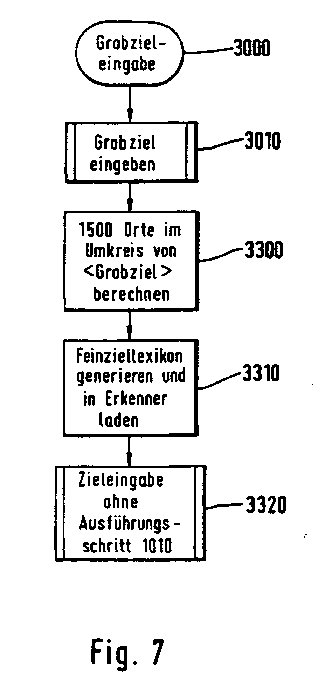

Fig. 7 zeigt in schematischer Darstellung eine Ausführungsform des Eingabedialogs 'Grobzieleingabe'. In diesem Eingabedialog wird der Benutzer aufgefordert eine ihm bekannte größere Stadt in der Nähe des eigentlichen Zielortes als Grobziel zu sprechen, wobei das Grobziel im Grund-Lexikon enthalten sein sollte. Nach der Aktivierung des Eingabedialogs 'Grobzieleingabe' im Schritt 3000 wird im Schritt 3010 ein Eingabedialog 'Grobziel eingeben' aufgerufen. Für den Eingabedialog 'Grobziel eingeben' im Schritt 3010 ergibt sich nahezu der gleiche Ablauf wie beim Eingabedialog 'Zielorteingabe'. Bei der Eingabeaufforderung wird jedoch im Gegensatz zum Schritt 1020 gemäß Fig. 2 oder Fig. 3 der Benutzer nicht zur Eingabe des Zielortes sondern zur Eingabe des Grobziels aufgefordert. Nach der Durchführung des Teileingabedialogs 'Grobziel eingeben' gemäß Schritt 3010 wird das Ergebnis des Eingabedialogs 'Grobziel eingeben' zur Fortführung des Eingabedialogs 'Grobzieleingabe' an den Schritt 3300 übergeben. Im Schritt 3300 werden m Ortsnamen im Umkreis des als Ergebnis des Eingabedialog 'Grobziel eingeben' übergebenen Grobziels berechnet. Der Parameter m ist abhängig von der Leistungsfähigkeit der verwendeten Spracherkennungseinrichtung und der Übertragungskapazität zwischen der mindestens einen Datenbasis und der Spracherkennungseinrichtung. Bei dem beschriebenen Ausführungsbeispiel wird der Parameter m auf 1500 gesetzt. Aus diesen 1500 Ortsnamen, welche Teil der Zieldatei sind, wird im Schritt 3310 ein Feinziel-Lexikon generiert und als Vokabular in die Spracherkennungseinrichtung geladen. Anschließend wird im Schritt 3320 der Eingabedialog 'Zielorteingabe' gemäß Fig. 2 oder Fig. 3 durchgeführt. Mit dem Unterschied, daß der Schritt 1010 nicht ausgeführt wird, da das notwendige Vokabular zur Erkennung des Zielortes schon in der Spracherkennungseinrichtung geladen ist. Zur Abkürzung des Eingabedialogs 'Grobzieleingabe' ist es aber auch vorstellbar, daß im Eingabedialog 'Grobziel eingeben' eine verkürzte Ausführung des Eingabedialogs 'Zielorteingabe' gemäß Fig. 3 durchgeführt wird. In der verkürzten Ausführung des Eingabedialogs 'Zielorteingabe' gemäß Fig. 3 wird auf den Eingabedialog 'Zielort buchstabieren' verzichtet und nach der Abfrage 1075 gemäß Fig. 3 nicht der Eingabedialog 'Zielort buchstabieren' aufgerufen sondern dem Benutzer mittels Sprachausgabe mitgeteilt, daß das Grobziel nicht gefunden werden konnte und der Eingabedialog 'Grobzieleingabe' wird beendet. Zur Beschleunigung des Eingabedialogs kann für den Eingabedialog 'Grobziel eingeben' ein Grobziel-Lexikon generiert werden und anschließend als Vokabular in die Spracherkennungseinrichtung geladen oder aktiviert werden, wobei das Grobziel-Lexikon anstelle der 1000 größten Orte des Grund-Lexikons nur die 400 größten Orten der Bundesrepublik enthält. Dadurch ergibt sich im Schritt 1150 gemäß Fig. 3 in den meisten Anwendungsfällen eine wesentlich kürzere Mehrdeutigkeitsliste. Zusätzlich kann auch auf den Eingabedialog 'Mehrdeutigkeit auflösen' verzichtet werden. Anstelle des Eingabedialogs 'Mehrdeutigkeit auflösen' wird der Eingabedialog 'Aus Liste auswählen' aufgerufen um den Benutzer das gewünschte Grobziel auswählen zu lassen oder es werden nur die beiden Orte mit der größten Einwohnerzahl in der Mehrdeutigkeitsliste an den Benutzer zur endgültigen Auswahl des Grobziels ausgegeben. Wurde das gewünschte Grobziel nicht gefunden, so wird der Eingabedialog 'Grobzieleingabe' beendet und in den Wartezustand 0 zurückgekehrt.

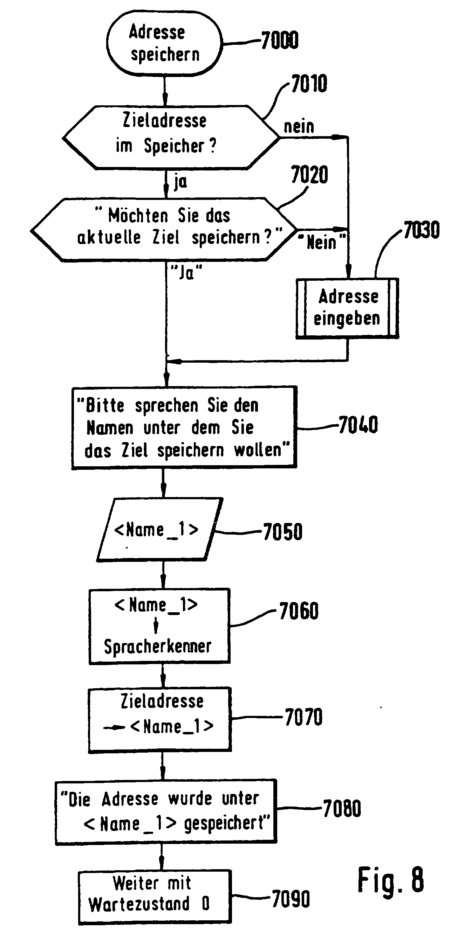

Fig. 8 zeigt in schematischer Darstellung eine Ausführungsform des Eingabedialogs 'Adresse speichern'. Nach der Aktivierung des Eingabedialogs 'Adresse speichern' im Schritt 7000 wird im Schritt 7010 überprüft, ob bereits eine Zieladresse eingegeben wurde. Ergibt die Überprüfung 7010 ein positives Ergebnis, so wird zur Abfrage 7020 verzweigt. Ergibt die Überprüfung 7010 ein negatives Ergebnis, so wird zum Schritt 7030 verzweigt. Im Schritt 7020 wird eine Abfrage an den Benutzer ausgegeben, ob er die aktuelle Zieladresse speichern will oder nicht. Beantwortet der Benutzer die Abfrage mit "Ja", so wird zum Schritt 7040 verzweigt. Beantwortet der Benutzer die Abfrage mit "Nein", so wird zum Schritt 7030 verzweigt. Im Schritt 7030 wird ein Eingabedialog 'Adresse eingeben' aufgerufen. Der Eingabedialog 'Adresse eingeben' gibt eine Abfrage an den Benutzer aus, welchen der vier Eingabedialoge 'Zielorteingabe', 'Grobzieleingabe', 'Zielort buchstabieren' oder 'Indirekte Eingabe' der Benutzer zur Eingabe der Zieladresse, welche gespeichert werden soll, durchführen möchte. Die Auswahl des gewünschten Eingabedialogs kann dabei analog zum Eingabedialog 'Aus Liste auswählen' durchgeführt werden. Zudem ist es vorstellbar, daß der Eingabedialog 'Adresse eingeben' direkt nach der Aktivierung einen der vier Eingabedialoge zur Spracheingabe eines Zielortes ('Zielorteingabe', 'Zielort buchstabieren', 'Grobzieleingabe' oder 'Indirekte Eingabe') aufruft, ohne eine Abfrage an den Benutzer auszugeben. Nach der Spracheingabe eines Zielortes wird analog zu den Schritten 350 und 400 gemäß Fig. 1 überprüft ob, ein Straßenname eingegeben werden kann und wenn ja, ob ein Straßenname eingegeben werden soll oder nicht. Wird kein Straßenname eingegeben, so wird der Schritt 450 gemäß Fig. 1 durchgeführt. Anschließend wird die eingegebene Zieladresse als Ergebnis des Eingabedialogs 'Adresse eingeben' zur Weiterführung des Eingabedialogs 'Adresse speichern' zwischengespeichert. Im Schritt 7040 wird der Benutzer aufgefordert ein Schlüsselwort zu sprechen, welches der eingegebenen Zieladresse zugeordnet werden soll und unter welchem die Zieladresse im persönlichen Adreßregister abgelegt werden soll. Das vom Benutzer im Schritt 7050 gesprochene Schlüsselwort wird im Schritt 7060 als akustischer Wert <Schlüsselwort> dem sprecherabhängigen Zusatz-Spracherkenner zugeführt und gegebenenfalls durch mehrmaliges, insbesondere zweimaliges, Sprechen verifiziert. Anschließend wird im Schritt 7070 die eingegebene Zieladresse dem Schlüsselwort zugeordnet und der akustische Wert <Schlüsselwort> im persönlichen Adreßregister gespeichert. Der Benutzer wird mittels einer Sprachausgabe im Schritt 7080 informiert, daß die Zieladresse unter dem eingegebenen <Schlüsselwort> gespeichert wurde. Anschließend wird im Schritt 7090 der Eingabedialog 'Adresse speichern' beendet und zum Wartezustand 0 gemäß Fig. 1 verzweigt. Mittels dem nicht detailliert dargestellten Eingabedialog 'Adresse abrufen', kann die gespeicherte Zieladresse durch eine Spracheingabe des zugeordneten Schlüsselwortes, welches zur Erkennung dem sprecherabhängigen Spracherkenner zugeführt wird, abgerufen und an das Zielführungssystem übergeben werden. Wurde die Schlüsselworte in die Ortsliste aufgenommen, dann ist auch ein Buchstabieren des Schlüsselwortes möglich, wenn das Schlüsselwort als Ganzworteingabe nicht erkannt wurde.

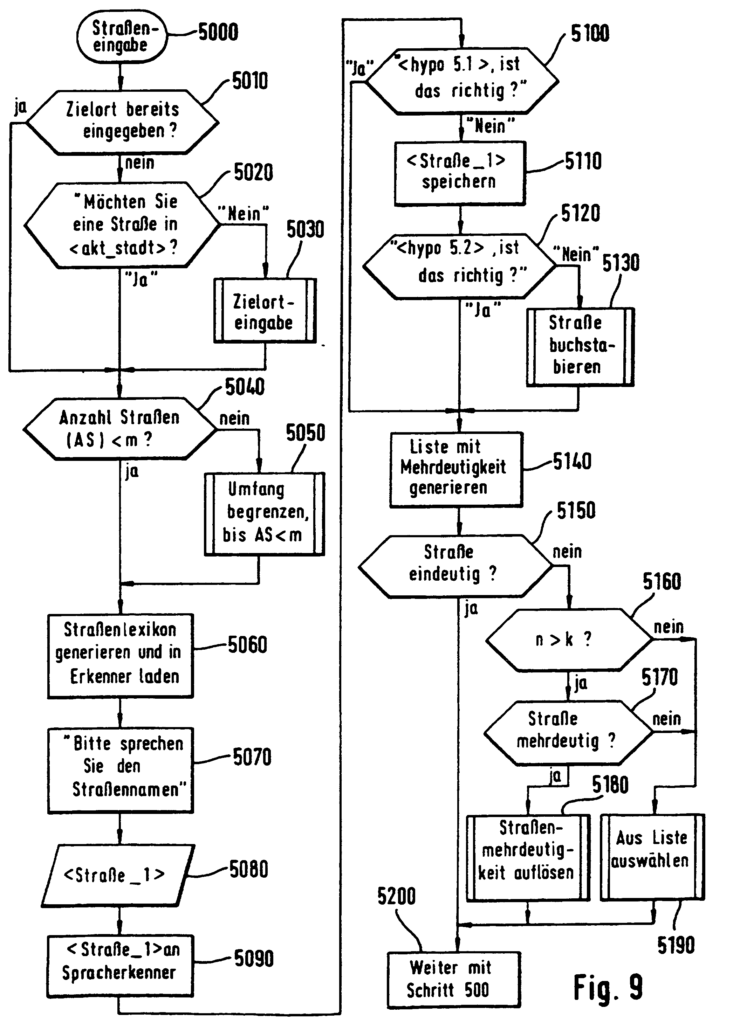

Fig. 9 zeigt in schematischer Darstellung eine Ausführungsform des Eingabedialogs 'Straßeneingabe'. Nach der Aktivierung des Eingabedialogs 'Straßeneingabe' im Schritt 5000 wird im Schritt 5010 überprüft, ob bereits ein Zielort eingegeben wurde oder nicht. Ergibt die Überprüfung 5010 ein positives Ergebnis, so wird der eingegebene Zielort zur Weiterführung des Eingabedialogs 'Straßeneingabe' verwendet und zum Schritt 5040 verzweigt. Ergibt die Überprüfung 5010 ein negatives Ergebnis, so wird im Schritt 5020 eine Abfrage an den Benutzer ausgegeben, ob sich die Straße in dem aktuellen Ort befindet oder nicht. Den aktuellen Ort ermittelt das Zielführungssystem mit Hilfe eines aus dem Stand der Technik bekannten Ortungsverfahren, beispielsweise mittels dem Global Positioning System (GPS). Beantwortet der Benutzer die Abfrage mit "Ja", so wird der aktuelle Ort als Zielort zur Weiterführung des Eingabedialogs 'Straßeneingabe' verwendet und zum Schritt 5040 verzweigt. Beantwortet der Benutzer die Abfrage mit "Nein" so wird zum Schritt 5030 verzweigt. Im Schritt 5030 wird ein Eingabedialog 'Zielort eingeben' aufgerufen. Der Eingabedialog 'Zielort eingeben' gibt analog zum Eingabedialog 'Adresse eingeben' eine Abfrage an den Benutzer aus, welchen der vier Eingabedialoge 'Zielorteingabe', 'Grobzieleingabe', 'Zielort buchstabieren' oder 'Indirekte Eingabe' der Benutzer zur Eingabe der Zieladresse, welche gespeichert werden soll, durchführen möchte. Die Auswahl des gewünschten Eingabedialogs kann dabei analog zum Eingabedialog 'Aus Liste auswählen' durchgeführt werden. Zudem ist es vorstellbar, daß der Eingabedialog 'Zielort eingeben' direkt nach der Aktivierung, ohne eine Abfrage an den Benutzer auszugeben, einen der vier Eingabedialoge zur Spracheingabe eines Zielortes aufruft. Nach der Durchführung des Eingabedialogs 'Zielort eingeben' wird als Ergebnis der eingegebene Zielort zur Weiterführung des Eingabedialogs 'Straßeneingabe' verwendet und zum Schritt 5040 verzweigt. Im Schritt 5040 wird überprüft, ob die Anzahl der Straßen des gewünschten Zielortes größer als m ist oder nicht. Der Parameter m-ist dabei von der Art der Spracherkennungseinrichtung abhängig. Bei dem beschriebenen Ausführungsbeispiel, wurde m = 1500 gesetzt. Ist die Anzahl der Straßen des gewünschten Zielortes kleiner als m, so wird eine Straßenliste des gewünschten Zielortes zur Weiterführung des Eingabedialogs 'Straßeneingabe' an den Schritt 5060 übergeben. Ist die Anzahl der Straßen des gewünschten Zielortes größer als m, so wird zum Schritt 5050 verzweigt. Im Schritt 5050 wird ein Eingabedialog 'Umfang begrenzen' aktiviert, mit dem Ziel den Umfang der Straßenliste auf weniger als m Einträge von Straßennamen zu reduzieren. Zu diesem Zweck kann der Benutzer aufgefordert werden verschiedene Auswahlkriterien, beispielsweise den Namen eines Stadtteils, die Postleitzahl oder den Anfangsbuchstaben des gewünschten Straßennamens, mittels Spracheingabe einzugeben. Analog zum Eingabedialog 'Mehrdeutigkeit auflösen' können die Auswahlkriterien beliebig kombiniert werden. Der Eingabedialog 'Umfang begrenzen' wird beendet, wenn der Umfang auf m oder weniger Straßennamen reduziert wurde. Als Ergebnis des Eingabedialogs wird die reduzierte Straßenliste an den Schritt 5060 übergeben. Im Schritt 5060 wird aus der übergebenen Straßenliste ein Straßen-Lexikon generiert und in die Spracherkennungseinrichtung geladen. Im Schritt 5070 wird der Benutzer aufgefordert den Straßennamen zu sprechen. Die Weiterführung des Eingabedialogs 'Straßenname' ist nun analog zum Eingabedialog 'Zielorteingabe' gemäß Fig. 3. Die vom Benutzer gesprochene "Straße_1" (Schritt 5080) wird als akustische Wert <Straße_1> an die Spracherkennungseinrichtung übergeben. Als Ergebnis liefert die Spracherkennungseinrichtung eine fünfte Hypothesenliste hypo.5 zur Weiterführung des Eingabedialogs 'Straßeneingabe' zurück (Schritt 5090). Im Schritt 5100 wird der Straßenname mit der größten Erkennungswahrscheinlichkeit hypo.5.1 an den Benutzer mit der Abfrage ausgegeben, ob <hypo.5.1> der gewünschte Straßenname ist oder nicht. Beantwortet der Benutzer die Abfrage 5100 mit "Ja", so wird zum Schritt 5140 verzweigt. Beantwortet der Benutzer die Abfragte 5100 mit "Nein", so wird der akustische Wert <Straße_1> im Schritt 5110 gespeichert. Anschließend wird im Schritt 5120 der Straßenname mit der zweitgrößten Erkennungswahrscheinlichkeit hypo.5.2 an den Benutzer mit der Abfrage ausgegeben, ob <hypo.5.2> der gewünschte Straßenname ist oder nicht. Wird die Abfrage 5120 mit "Ja" beantwortet, so wird zum Schritt 5140 verzweigt. Beantwortet der Benutzer die Abfrage mit "Nein" so wird im Schritt 5130 ein Eingabedialog 'Straße buchstabieren' aufgerufen. Der Eingabedialog 'Straße buchstabieren' ist bis zum Schritt 2100 analog zum Einabedialog 'Zielort buchstabieren' und wurde in der Beschreibung zur Fig. 6 bereits abgehandelt. Es müssen nur die in der Beschreibung verwendeten Begriffe, Zielort, neue Ortsliste, sinngemäß durch die Begriffe Straßenname, neue Straßenliste ersetzt werden. Anstelle des Schritts 2100 gemäß dem Eingabedialog 'Zielort buchstabieren' wird der Eingabedialog 'Straße buchstabieren' beendet und das Ergebnis des Eingabedialogs 'Straße buchstabieren' zur Weiterführung des Eingabedialogs 'Straßeneingabe' an den Schritt 5140 übergeben. Im Schritt 5140 ermittelt das System aus der Straßenliste, welche alle möglichen Straßennamen des gewünschten Zielortes enthält, eine Mehrdeutigkeitsliste, in welcher alle Straßennamen aus der Straßenliste, welche in der Orthographie der Hypothese hypo.5.1 bzw. der Hypothese hypo.5.2 aus der fünften Hypothesenliste hypo.5 bzw. dem Ergebnis des Eingabedialogs 'Straße buchstabieren' entsprechen, aufgenommen sind. Im Schritt 5150 wird überprüft, ob der eingegebene Straßenname eindeutig ist oder nicht. Ist der eingegebene Straßenname eindeutig, so wird zum Schritt 5200 verzweigt. Ergibt die Abfrage ein negatives Ergebnis, so wird zum Schritt 5160 verzweigt. Im Schritt 5160 wird überprüft ob die Mehrdeutigkeitsliste mehr als k Einträge umfaßt oder nicht. Umfaßt die Mehrdeutigkeitsliste k oder weniger Einträge, so wird zum Schritt 5190 verzweigt. Umfaßt die Mehrdeutigkeitsliste mehr als k Einträge so wird zum Schritt 5170 verzweigt. Im Schritt 5170 wird überprüft ob die Mehrdeutigkeit durch Eingabe von zusätzlichen Abfragekriterien, beispielsweise der Postleitzahl oder des Stadtteils, aufgelöst werden kann. Ergibt die Überprüfung 5170 ein positives Ergebnis, so wird im Schritt 5180 ein Eingabedialog 'Straßenmehrdeutigkeit auflösen' aufgerufen. Dieser Eingabedialog verläuft analog zum Eingabedialog 'Mehrdeutigkeit auflösen' gemäß Fig. 5. Als Abfragekriterien kann die Postleitzahl oder der Stadtteil eingegeben werden. Anschließend wird das Ergebnis des Eingabedialogs 'Straßenmehrdeutigkeit auflösen' zur Weiterführung des Eingabedialogs 'Straßeneingabe' an den Schritt 5200 übergeben. Ergibt die Überprüfung 5170 ein negatives Ergebnis, so wird zum Schritt 5190 verzweigt. Im Schritt 5190 wird der Eingabedialog 'Aus Liste auswählen' aktiviert und durchgeführt. Das Ergebnis des Eingabedialogs 'Aus Liste auswählen' wird zur Weiterführung des Eingabedialogs 'Straßeneingabe' an den Schritt 5200 übergeben. Im Schritt 5200 wird der Eingabedialog 'Straßeneingabe' beendet und das Ergebnis gemeinsam mit dem gewünschten Zielort als Zieladresse an den Schritt 500 gemäß Fig. 1 übergeben.

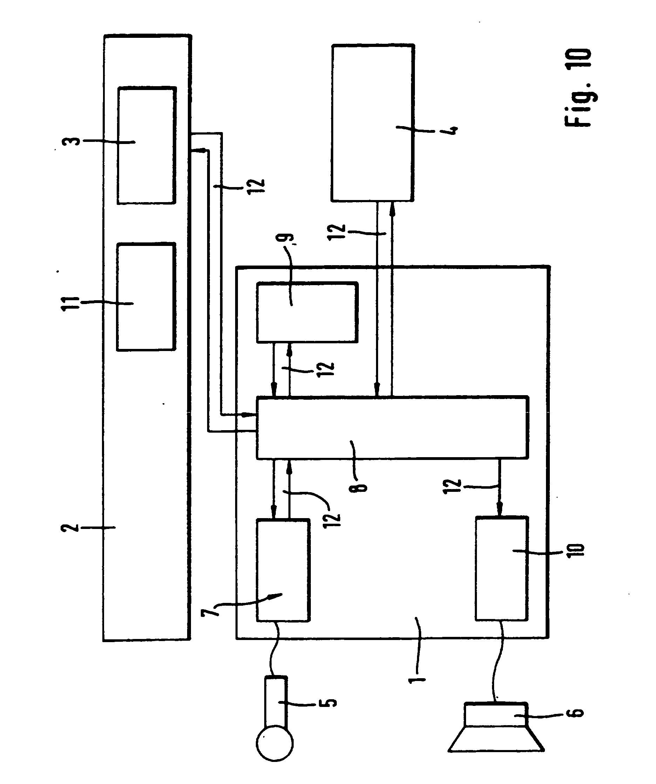

Fig. 10 zeigt in schematischer Darstellung ein Blockschaltbild einer Vorrichtung zur Durchführung des erfindungsgemäßen Verfahrens. Wie aus der Fig. 10 ersichtlich ist umfaßt die Vorrichtung zur Durchführung des erfindungsgemäßen Verfahrens ein Sprachdialogsystem 1, ein Zielführungssystem 2 und eine externe Datenbasis 4, auf welcher beispielsweise die Zieldatei abgespeichert ist. Das Sprachdialogsystem 1 umfaßt eine Spracherkennungseinrichtung 7 zum Erkennen und Klassifizieren von mittels einem Mikrophon 5 von einem Benutzer eingegebenen Sprachäußerungen, eine Sprachausgabeeinrichtung 10 die mittels einem Lautsprecher 6 Sprachäußerungen an einen Benutzer ausgeben kann, eine Dialog- und Ablaufsteuerung 8 und eine interne Datenbasis 9, in welcher beispielsweise alle Sprachkommandos gespeichert sind. Das Zielführungssystem 2 umfaßt einen internen nicht flüchtigen Speicher 3, in dem beispielsweise das Grundlexikon abgelegt ist, und eine optische Anzeigevorrichtung 11. Mittels der Dialog- und Ablaufsteuerung 8 können über entsprechende Verbindungen 12, welche auch als Datenbus ausgeführt sein können, Daten zwischen den einzelnen Komponenten der Vorrichtung ausgetauscht werden.

Zur Verdeutlichung der beschriebenen Eingabedialoge werden in den Tabellen 2 bis 6 verschiedene Eingabedialoge dargestellt.

**Tabelle 2:**

| Dialogbeispiel "Zielorteingabe mit Auflösung von Mehrdeutigkeiten": | | |
|---|---|---|
| System | Benutzer | Anmerkung |
| | betätigt PTT-Taste | Der Benutzer aktiviert das Sprachdialogsystem |
| Beep | | |
| | "Zielorteingabe" | Es wird der Eingabedialog 'Zielorteingabe' aktiviert |
| "Bitte Ortsnamen sprechen" | "Neunkirchen" | |
| | | Der Spracherkennungseinrichtung vergleicht die akustische Eingabe mit dem im sprecherunabhängigen Spracherkenner aktivierten Vokabular und gibt das Ergebnis mit der größten Erkennungswahrscheinlichkeit aus. |
| "Neunkirchen ist das richtig?" | | |
| | "Ja" | Das Sprachdialogsystem sucht in der Zieldatei alle Einträge mit dem Ortsnamen 'Neunkirchen' und erzeugt intern zu weiteren Verarbeitung eine Mehrdeutigkeitsliste gemäß Tabelle 2a. |
| "Neunkirchen wurde 18 mal in 6 Bundesländern gefunden. | - | Das System weist den Benutzer auf die Mehrdeutigkeit hin und schlägt als Zielort den Ort mit den meisten Einwohnern vor, da die Wahrscheinlichkeit, daß dieser gemeint war am größten ist. |
| Möchten Sie in die Großstadt Neunkirchen im Saarland?" | | |
| | | Antwortet der Benutzer mit "Ja", so wird Neunkirchen im Saarland als Zielort festgelegt. |
| | | Antwortet der Benutzer mit "Nein", dann muß zur Auflösung der Mehrdeutigkeit nach weiteren Abfragekriterien gefragt werden. Mögliche Abfragekriterien sind: Postleitzahl, Ortsnetzkennzahl oder das Bundesland des gesuchten Ortes. Da hier die Postleitzahl oder die Ortsnetzkennzahl am schnellsten zum Ziel führen würde, wird zuerst nach ihnen gefragt. |
| | "Nein" | |
| "Kennen Sie die Postleitzahl von Neunkirchen?" | "Nein" | |
| Kennen Sie die Ortsnetzkennzahl von Neunkirchen? | "Nein" | |
| "Kennen Sie das Bundesland in dem Neunkirchen liegt?" | "Ja" | |
| "In welchem Bundesland liegt Neunkirchen?" | "Bayern" | |
| "Neunkirchen gibt es sechs mal in Bayern. Sollen die Orte vorgelesen werden?" | | Stehen nur noch wenige Orte zur Auswahl fragt das System, ob die Ort vorgelesen werden sollen. Gleichzeitig zeigt das System die noch möglichen Orte auf der Anzeigeeinrichtung des Zielfindungssystems an. |
| | | (Zusätzlich denkbar: Stehen nur noch zwei Orte zur Auswahl liest das System die beiden Orte vor und fordert den Benutzer auf einen der beiden Orte als Zielort auszuwählen.) |
| | "Ja" | |
| "Bitte wählen Sie aus den folgenden Orten: | | |
| Neunkirchen | | |
| 1. am Brand im Lkr. Forchheim | | |
| 2. am Sand im Lkr. Nürnberg-Land | | |
| 3. im Lkr. Miltenberg | | |
| 4. bei Leutershausen im Lkr. Ansbach, weiter" | | |
| | "Weiter" | Die nächste Seite wird angezeigt |
| "Neunkirchen | | Zur besseren Übersicht und um das Vokabular klein zu halten werden die angezeigten Orte auf jeder Seite mit eins beginnend numeriert |
| 1. bei Teisendorf im Lkr. Berechtesgadener Land | | |
| 2. bei Weidenberg im Lkr. Bayreuth" | | |
| | "Nummer zwei" oder "Neunkirchen bei Weidenberg" | |
| "Zielführung programmiert auf Neunkirchen bei Weidenberg im Lkr. Bayreuth in Bayern" | | Damit ist der Zielort festgelegt und die zum Zielort gehörenden Straßennamen können bei Bedarf geladen werden. |
| ... | ... | ... |

**Tabelle 2a**

| Mehrdeutigkeitsliste | | | | | | |
|---|---|---|---|---|---|---|
| Lfd. -Nr. | PLZ. | Ortsnk. | Bundesland | Namenszusatz | Kreis | Einwohn. |
| 1: | 66510-66589 | 06821 | SL | | Neunkirchen | 51863 |
| 2: | 53819 | 02247 | NW | Seelscheid | Rhein-SiegKreis | 17360 |
| 3: | 57290 | 02735 | NW | | Siegen-Wittgenstein | 14804 |
| ... | ... | ... | ... | ... | ... | ... |
| 17: | 83317 | 08666 | BY | am Teisenberg | Berchtesgadener Land | 0 |
| 18: | 95466 | 09278 | BY | | Bayreuth | 0 |

**Tabelle 3:**

| Dialogbeispiel "Kombination aus 'Zielorteingabe' und 'Zielort buchstabieren' ohne Mehrdeutigkeit" | | |
|---|---|---|
| System | Benutzer | Anmerkung |
| | betätigt PTT-Taste | Der Benutzer aktiviert das Sprachdialogsystem |
| Beep | | |
| | "Zieleingabe" | |
| "Bitte Ortsnamen sprechen" | | |
| | "Elmenthall" | Der Benutzer spricht den Ortsnamen, von dem er irrtümlich annimmt, daß dieser im Grundvokabular enthalten ist. Da Elmenthal im Grundvokabular nicht vorkommt, kommt es zu einer Falschmeldung. (Ergebnis aus dem sprecherunabhängigen Spracherkenner: |
| | | 1. Hypothese: Emmerthal |
| | | 2. Hypothese: keine) |
| "Emmerthal, ist das richtig?" | | Verifikation des Erkennungsvorganges |
| | "Nein" | |
| "Bitte Ortsnamen noch mal sprechen" | | |
| | "Elmenthal" | Es kommt erneut zur Falscherkennung. (Ergebnis aus dem sprecherunabhängigen Spracherkenner: |
| | | 1. Hypothese: Emmerthal |
| | | 2. Hypothese: Elmshorn) |
| | | In diesem Fall wird die zweite Hypothese überprüft, weil die erste Hypothese schon bei der |
| | | vorangegangenen Verifikation vom Benutzer zurückgewiesen wurde. |
| "Elmshorn ist das richtig?" | | Verifikation der 2. Hypothese |
| | "Nein" | Die Spracheingabe wird nun für einen späteren Erkennungsversuch zwischengespeichert. Es wird der Eingabedialog 'Zielort buchstabieren aufgerufen. |
| "Bitte buchstabieren Sie den Ortsnamen" | "E-L-M-E-N" #Pause# "T-H-A-L" | Der Benutzer spricht die Buchstaben verbunden ein. Er hat die Möglichkeit die Buchstaben in Buchstabengruppen getrennt durch kleine Pausen zu sprechen. Nach einer längeren Pause bricht der Erkenner die Eingabe ab und gibt eine Hypothesenliste aus. (Ergebnis aus der Buchstabiererkennung: |
| | | 1. Hypothese Ülmenthal |
| | | 2. Hypothese Ülmenphal |
| | | ...) |
| | | Das Sprachdialogsystem berechnet aus der ersten Hypothese eine Liste von Orten, die als mögliche Zielorte in Frage kommen: |
| | | Elmenthal 8.06365 |
| | | Blumenthal 12.4422 ... |
| | | |
| | | Aus diesen Orten wird ein neues Ganzwort-Lexikon generiert (Größenordnung ca. 100 Worte) und in den Erkenner geladen. |
| | | Die vorher abgespeicherte |
| | | Spracheingabe 'Blmenthal' dient nun als neue Spracheingabe. Da jetzt der gesuchte Ort im Vokabular enthalten ist, besteht die Möglichkeit den Ort richtig zu erkennen |
| "Elmenthal, ist das richtig" | | |
| | "Ja" | Da Elmenthal in der erzeugten Mehrdeutigkeitsliste eindeutig ist, braucht nicht weiter verifiziert zu werden. |
| "Zielführung programmiert auf Elmenthal im Landkreis Schmalkalden-Meiningen in Thüringen" | | Damit ist der Zielort festgelegt und die zum Zielort gehörenden Straßennamen können bei Bedarf geladen werden. |
| ... | ... | ... |

**Tabelle 4:**

| Dialogbeispiel 'Grobzieleingabe' ohne Mehrdeutigkeit | | |
|---|---|---|
| System | Benutzer | Anmerkung |
| | betätigt PTT-Taste | Der Benutzer aktiviert das Sprachdialogsystem |
| Beep | | |
| | "Grobziel" | |
| "Bitte Grobziel sprechen" | | |
| | "Stuttgart" | |
| "Stuttgart ist das richtig?" | | Verifikation des Erkennungsergebnisses |
| | "Ja" | |
| "Lexikon für Stuttgart wird geladen" | | Das Lexikon mit 1500 Ortsnamen im Umkreis von Stuttgart wird generiert und in die Spracherkennungseinrichtung geladen. |
| | | Das Lexikon kann gegebenenfalls auch vorberechnet auf der Datenbasis liegen. Nach dem Laden kann der gewünschte Zielort eingegeben werden. |
| "Bitte Ortsnamen sprechen" | | |
| | "Wolfschlugen" | |
| "Wolfschlugen ist das richtig?" | | Verifikation des Erkennungsergebnisses |
| | "Ja" | |
| "Zielführung wird programmiert auf Wolfschlugen im Landkreis Esslingen in Baden-Württemberg" | | Da Wolfschlugen eindeutig ist, müssen keine weiteren Abfragen durchgeführt werden und das Zielführungssystem kann bei Bedarf die evtl. vorhandenen Straßennamen von Wolf schlugen laden. |
| ... | ... | ... |

**Tabelle 5:**

| Dialogbeispiel 5 'Straßeneingabe' | | |
|---|---|---|
| System | Benutzer | Anmerkung |
| | betätigt PTT-Taste | Der Benutzer aktiviert das Sprachdialogsystem |
| Beep | | |
| | "Straßeneingabe" | |
| "Möchten Sie einen Straßennamen für | | Das System fragt, ob die aktuelle Stadt als Zielort korrekt |
| Stuttgart eingeben?" | | ist. Wird hier mit "Nein" geantwortet muß zunächst ein Dialog zur Eingabe eines Zielortes aufgerufen werden (Eingabedialoge 1-4) |
| | "Ja" | Der Benutzer möchte einen Straßennamen für Stuttgart eingeben. Die Anzahl der Straßennamen für diese Stadt liegt bei ca. 3200 Namen und übersteigt daher die maximale Vokabulargröße des Spracherkenners von ca. 1500 Worten. Der Benutzer wird daher aufgefordert, den Anfangsbuchstaben des Straßennamen zu sprechen um danach aus allen Straßennamen mit diesem Anfangsbuchstaben ein Straßen-Lexikon zu generieren und in die Spracherkennungseinrichtung zu laden. Möglich wäre hier auch die Eingabe eines Buchstabenbereichs wie z.B. A bis E, F bis J usw.. Dann müßten in der Regel aber mehr Daten geladen und berechnet werden. Außerdem stiege bei größerem Vokabular die Vertauschungswahrscheinlichkeit. |
| "Bitte sprechen Sie den Anfangsbuchstaben des Straßennamens!" | | |
| | "P" oder "P wie | |
| | Paula" | |
| "Bitte wählen Sie aus den Alternativen" | | Da die Vertauschungswahrscheinlichkeit bei den Buchstaben sehr hoch ist, gibt der Erkenner ein Hypothesenauswahl auf der Anzeigeeinrichtung des Zielführungssystems und/oder als Sprachausgabe aus. Über die vorangestellte Nummer kann der Benutzer den gewünschten Buchstaben auswählen oder eine neue Eingabe anfordern, wenn der gesprochene Buchstabe nicht dabei ist. Gibt der Erkenner nur eine Alternative zurück, bietet das System diese als erkannten Anfangsbuchstaben dem Benutzer zur Verifikation an. Bei der zweiten Eingabeart 'P wie Paula' ist die Gefahr der Falscherkennung erheblich geringer, aber die Kennwörter für die einzelnen Buchstaben müssen dem Benutzer bekannt sein. Anzeige auf dem Display und/oder als Sprachausgabe bei mehr als einer Buchstabenhypothese: |
| | | 1. W wie Wilhelm |
| | | 2. G wie Gustav |
| | | 3. B wie Berta |
| | | 4. E wie Emil |
| | | 5. D wie Dora |
| | | 6. P wie Pauls |
| | | Fehler |
| | "Nummer sechs" | |
| "Straßenname mit 'P wie Paula' werden geladen" | | Das Sprachdialogsystem erzeugt in diesem Fall eine Straßenliste mit 87 Straßennamen mit dem Anfangsbuchstaben 'P'. Da über den Anfangsbuchstaben die Anzahl der zu ladenden Daten gering ist, wird durch diese Eingabe die Wartezeit für den Benutzer auf ein Minimum begrenzt. Anschließend wird aus der Straßenliste ein Straßen-Lexikon für den sprechehängigen Spracherkenner generiert und der Benutzer wird aufgefordert den Straßennamen zu sprechen. |
| "Bitte sprechen Sie den Straßennamen!" | | |
| | "Pflasteräcker straße" | |
| "Pflasteräckerstraße ist das richtig?" | | Verifikation des Straßennamens. |
| | "Ja" | |
| "Zielführung programmiert auf 'Stuttgart, Pflasteräckerstraße'" | | |
| ... | ... | ... |

**Tabelle 6:**

| Alternativer Eingabedialog 'Straßeneingabe' | | |
|---|---|---|
| System | Benutzer | Anmerkung |
| | betätigt PTT-Taste | Der Benutzer aktiviert das Sprachdialogsystem |
| Beep | | |
| | "Straßeneingabe" | |
| "Möchten Sie einen Straßennamen für Reutlingen eingeben?" | | Das System fragt, ob die aktuelle Stadt als Zielort korrekt ist. Wird hier mit "Nein" geantwortet muß zunächst ein Dialog zur Eingabe eines Zielortes aufgerufen werden (Eingabedialoge 1-4) |
| | "Ja" | Der Benutzer möchte einen Straßennamen für Reutlingen eingeben. Die Anzahl der Straßennamen für diese Stadt liegt unter 1500 Straßennamen und übersteigt daher die maximale Vokabulargröße des Spracherkenners von ca. 1500 Worten nicht. |
| "Bitte sprechen Sie den Straßennamen!" | | |
| | "Bismarkstraße" | Der akustische Wert <Bismarkstraße> der Spracheingabe wird gespeichert und eine ASCII-Liste mit den Straßennamen des Zielortes von der Datenbasis geladen. |
| "Bitte buchstabieren Sie den Straßennamen" | | |
| | "B-I-S-M-A-R-K" #Pause# "STRAßE" oder alternativ "B-I-S-M- | Der Benutzer spricht die Buchstaben verbunden oder in Buchstabengruppen getrennt durch eine kurze Pause ein. Alternativ kann der Zusatz '-straße', '-gasse', '-weg' weggelassen werden. Nach einer längeren |
| | A-R-K" | Pause bricht die Spracherkennungseinrichtung die Eingabe ab und berechnet als Ergebnis eine Hypothesenliste. Nun kann aus der 1. Hypothese, oder aus den ersten n Hypothesen, aus dieser Hypothesenliste eine Straßenliste mit den Straßennamen, welche als eingegebene Straße in Frage kommen, durch Abgleich mit der ASCII-Liste auf der Datenbasis erzeugt werden. Aus dieser Straßenliste wird ein Straßen-Lexikon generiert und in die Spracherkennungseinrichtung geladen. Anschließend wird der gespeicherte akustische Wert <Bismarkstraße> in der Spracherkennungseinrichtung mit dem Vokabular des Straßenlexikons verglichen und der Straßenname mit der größten Erkennungswahrscheinlichkeit ausgegeben. |
| "Bismarkstraße, ist das richtig?" | | |
| | "Ja" | Da die erkannte Bismarkstraße eindeutig ist, kann auf weitere Abfragen verzichtet werden. |
| "Zielführung programmiert auf 'Reutlingen, Bismarkstraße'" | | |
| ... | ... | ... |

## Patentansprüche

1. Verfahren zur Spracheingabe einer Zieladresse in ein Zielführungssystem im Echtzeitbetrieb, bei welchem eingegebene Sprachäußerungen eines Benutzers mittels einer Spracherkennungseinrichtung erkannt und gemäß ihrer Erkennungswahrscheinlichkeit klassifiziert werden und diejenige Sprachäußerung mit der größten Erkennungswahrscheinlichkeit als die eingegebene Sprachäußerung identifiziert wird, wobei mindestens eine Sprachäußerung ein zulässiges Sprachkommando ist, welches die diesem Sprachkommando zugeordneten Bedienfunktionen des Zielführungssystems aktiviert, wobei alle zulässigen Sprachäußerungen auf mindestens einer Datenbasis gespeichert sind, wobei wenigstens eine Bedienfunktion des Zielführungssystems mindestens einen Eingabedialog umfasst, wobei nach der Aktivierung der wenigstens einen Bedienfunktion des Zielführungssystems in Abhängigkeit des mindestens einen Eingabedialogs aus den auf mindestens einer Datenbasis gespeicherten zulässigen Sprachäußerungen in Echtzeit mindestens ein Lexikon generiert und anschließend das mindestens eine Lexikon als Vokabular in die Spracherkennungseinrichtung geladen wird.

2. Verfahren nach Anspruch 1, wobei mindestens ein Lexikon aus den auf mindestens einer Datenbasis gespeicherten zulässigen Sprachäußerungen in einem 'Off-Line-Editiermodus' generiert wird, wobei nach der Aktivierung der wenigstens einen Bedienfunktion des Zielführungssystems in Abhängigkeit des mindestens einen Eingabedialogs das mindestens eine im 'Off-Line-Editiermodus' generierte Lexikon in Echtzeit als Vokabular in die Spracherkennungseinrichtung geladen wird.

3. Verfahren nach Anspruch 1 oder 2, wobei mindestens eine Sprachäußerung ein Ortsnamen und/oder ein Straßennamen ist, wobei alle zulässigen Ortsnamen in einer Zieldatei abgelegt sind und wobei für wenigstens einen zulässigen Ortsnamen alle zulässigen Straßennamen in einer Straßenliste abgelegt sind.

4. Verfahren nach Anspruch 1, wobei die Spracherkennungseinrichtung mindestens einen sprecherunabhängigen Spracherkenner und mindestens einen sprecherabhängigen Zusatz-Spracherkenner umfasst, wobei abhängig von dem mindestens einen Eingabedialog der sprecherunabhängige Spracherkenner zur Erkennung von einzeln gesprochenen Ortsnamen und/oder Straßennamen und/oder von einzeln und/oder in Gruppen gesprochenen Buchstaben und/oder von Wortteilen verwendet wird und der sprecherabhängige Zusatz-Spracherkenner zur Erkennung von mindestens einem gesprochenen Schlüsselwort verwendet wird.

5. Verfahren nach Anspruch 4, wobei dem mindestens einen Schlüsselwort eine bestimmte Zieladresse zugeordnet wird, wobei das mindestens eine gesprochene Schlüsselwort in einem persönlichen Adressregister gespeichert wird und wobei aus dem persönlichen Adressregister ein Namen-Lexikon generiert und in die Spracherkennungseinrichtung geladen wird.

6. Verfahren nach Anspruch 2, wobei ein Grund-Lexikon, welches im 'Off-Line-Editiermodus' generiert wurde, die 'p' größten Orte eines Staates enthält.

7. Verfahren nach Anspruch 6, wobei das Grund-Lexikon in einem internen nicht flüchtigen Speicher des Zielführungssystems gespeichert ist.

8. Verfahren nach Anspruch 1, wobei ein Umgebungs-Lexikon, welches in Echtzeit generiert wird, das 'a' Orte im Umkreis des aktuellen Fahrzeugstandortes enthält, wobei das Umgebungs-Lexikon in regelmäßigen Abständen aktualisiert wird.

9. Verfahren nach Anspruch 8, wobei das Umgebungs-Lexikon in einem internen nicht flüchtigen Speicher des Zielführungssystems gespeichert ist.

10. Verfahren nach Anspruch 3, wobei nach der Aktivierung eines Eingabedialogs 'Zielort buchstabieren' ein Teilwort-Lexikon zur Buchstabiererkennung in die Spracherkennungseinrichtung geladen wird, anschließend der Benutzer einzelne Buchstaben und/oder Buchstabengruppen als Sprachäußerungen eingibt, welche anschließend in der Spracherkennungseinrichtung mit dem Teilwort-Lexikon verglichen werden, wobei aus den erkannten Buchstaben und/oder Buchstabengruppen eine Hypothesenliste mit Worthypothesen gebildet wird, danach die ersten 'n' Worthypothesen mit der Zieldatei abgeglichen werden und aus dem Ergebnis des Abgleichs ein Ganzwort-Lexikon generiert und zur Ganzworterkennung in die Spracherkennungseinrichtung geladen wird, und anschließend ein gespeicherter akustischer Wert in der Spracherkennungseinrichtung zur Ganzworterkennung mit dem Ganzwort-Lexikon verglichen wird, wobei dieser akustische Wert aus einer als Ganzwort gesprochenen Sprachäußerung vor dem Laden des Teilwort-Lexikons erzeugt wurde.

11. Verfahren nach Anspruch 1, wobei nach dem Erkennen eines durch einen Eingabedialog 'Grobziel eingeben' eingegebenen 'Grobziels' durch das Zielführungssystem in Echtzeit 'm' Orte im Umkreis um den Ort 'Grobziel' berechnet werden und aus diesen 'm' Orten ein Feinziel-Lexikon generiert und in die Spracherkennungseinrichtung geladen wird.

12. Vorrichtung zum Ausführen des Verfahrens nach einem der vorhergehenden Ansprüche, bei welcher ein Zielführungssystem (2) über entsprechende Verbindungen (12) mit einem Sprachdialogsystem (1) verbunden ist, wobei abhängig von mindestens einer von einem Benutzer in eine Spracheingabeeinrichtung (5) gesprochene Sprachäußerung, wenn die gesprochene Sprachäußerung als ein zulässiges Sprachkommando von einer Spracherkennungseinrichtung (7) erkannt wird, mittels einer Dialog- und Ablaufsteuerung (8) eine dem Sprachkommando zugeordnete Bedienfunktion des Zielführungssystems (2) aktiviert wird, wobei alle zulässigen Sprachäußerungen auf mindestens einer Datenbasis (9; 4; 3) gespeichert sind, wobei mittels der Dialog- und Ablaufsteuerung (8) in Abhängigkeit von mindestens einem Eingabedialog, welcher Teil mindestens einer Bedienfunktion ist, in Echtzeit wenigstens ein Lexikon aus den auf der mindestens einen Datenbasis (9; 4; 3) gespeicherten zulässigen Sprachäußerungen generiert und als Vokabular in die Spracherkennungseinrichtung (7) geladen wird.

13. Vorrichtung nach Anspruch 12, wobei mittels der Dialog- und Ablaufsteuerung (8) in Abhängigkeit von mindestens einem Eingabedialog mindestens ein im 'Off-Line-Editiermodus' generiertes Lexikon, welches auf mindestens einer Datenbasis (9; 4; 3) gespeichert ist, in Echtzeit als Vokabular in die Spracherkennungseinrichtung (7) geladen wird.

## Claims

1. A method for speech input of a destination address into a navigation system in real time, in which entered speech statements of a user are recognized by a speech recognition device and classified according to their recognition probability and the speech statement with the greatest recognition probability is identified as the speech statement that was input, with at least one speech statement being an admissible speech command that activates the operating functions of the navigation system associated with said speech command, all of the admissible speech statements being stored in at least one database, at least one operating function of the navigation system comprising at least one input dialogue, at least one lexicon being generated in real time following activation of the at least one operating function of the navigation system in dependence upon the at least one input dialogue from among the admissible speech statements stored in at least one database, and the at least one lexicon being then loaded as a vocabulary into the speech recognition device.

2. The method according to claim 1, wherein at least one lexicon is generated from the admissible speech statements stored in at least one database in an "off-line editing mode", the at least one lexicon generated in the "off-line editing mode" is loaded in real time as the vocabulary into the speech recognition device after activation of the at least one operating function of the navigation system in dependence upon the at least one input dialogue.

3. The method according to claim 1 or 2, wherein at least one speech statement is at least one of a place name and a street name, all admissible place names are stored in a destination file, and all admissible street names for at least one admissible place name are stored in a street list.

4. The method according to claim 1, wherein the speech recognition device comprises at least one speaker-independent speech recognition engine and at least one speaker-dependent additional speech recognition engine, wherein, depending on the at least one input dialogue, the speaker-independent speech recognition engine for recognizing place names, street names, or letters spoken one at a time or in groups or parts of words is used, and the speaker-dependent additional speech recognition engine is used to recognize at least one spoken keyword.

5. The method according to claim 4, wherein a particular destination address is assigned to the at least one keyword, the at least one spoken keyword is stored in a personal address list, and a name lexicon is generated from the personal address list and loaded into the speech recognition device.

6. The method according to claim 2, wherein a basic lexicon generated in the "off-line editing mode" contains the "p" largest places in a state.

7. The method according to claim 6, wherein the basic lexicon is stored in an internal nonvolatile memory of the navigation system.

8. The method according to claim 1, wherein an environment lexicon generated in real time contains "a" locations in an area of current vehicle location, with the environment lexicon being updated at regular intervals.

9. The method according to claim 8, wherein the environment lexicon is stored in an internal, nonvolatile memory of the navigation system.

10. The method according to claim 3, wherein following activation of an input dialogue "spell destination location" a partial-word lexicon for letter recognition is loaded into the speech recognition device, the user then enters individual letters and/or letter groups as speech statements, which are subsequently compared in the speech recognition device with the partial-word lexicon, a hypothesis list with word hypotheses is formed from the recognized letters and/or letter groups, the first "n" word hypotheses are then compared with the destination file and a whole-word lexicon is generated from the result of the comparison, and is loaded into the speech recognition device for whole-word recognition, and a stored acoustic value in the speech recognition device is then compared with the whole-word lexicon for whole-word recognition, said acoustic value having been generated from a speech statement spoken as a whole word prior to the loading of the partial-word lexicon.

11. The method according to claim 1, wherein following recognition of a "coarse destination" entered by means of an input dialogue "enter coarse destination", the navigation system calculates in real time "m" locations in the area around the location "coarse destination", and from said "m" locations a fine destination lexicon is generated and loaded into the speech recognition device.

12. An apparatus for carrying out the method according to any one of the preceding claims, in which a navigation system (2) is connected through corresponding connections (12) to a speech dialogue system (1), wherein depending on at least one speech statement spoken by a user into a speech input device (5) and when the spoken speech statement is recognized as an admissible speech command by a speech recognition device (7), an operating function of the navigation system (2) associated with the speech command is activated by means of a dialogue and process control (8), wherein all admissible speech statements are stored in at least one database (9; 4; 3), wherein at least one lexicon is generated in real time from the admissible speech statements, which are stored in the at least one database (9; 4; 3), by means of the dialogue and process control (8) in dependence upon at least one input dialogue forming part of at least one operating function, and is loaded as vocabulary into the speech recognition device (7).

13. The apparatus according to claim 12, wherein at least one lexicon which is generated in the "off-line editing mode" and stored in at least one database (9; 4; 3) is loaded in real time as vocabulary into the speech recognition device (7) by means of the dialogue and process control (8) in dependence upon at least one input dialogue.

## Revendications

1. Procédé d'enregistrement vocal d'une adresse de destination dans un système de navigation exploité en temps réel, dans lequel des paroles enregistrées par un utilisateur sont reconnues à l'aide d'un système de reconnaissance vocale et classifiées en fonction de leur probabilité de reconnaissance et les paroles avec la plus grande probabilité de reconnaissance étant identifiées en tant que la parole enregistrée, au moins une parole étant un ordre vocal autorisé qui active la fonction d'exploitation du système de navigation qui est associée à cet ordre vocal, toutes les paroles autorisées étant sauvegardées dans au moins une base de données, au moins une fonction d'exploitation du système de navigation comprenant au moins un dialogue d'entrée, après l'activation d'au moins la fonction d'exploitation du système de navigation en fonction d'au moins le dialogue d'entrée, au moins un dictionnaire étant généré en temps réel à partir des paroles autorisées sauvegardées dans au moins une base de données et au moins le dictionnaire étant chargé ensuite en tant que vocabulaire dans le système de reconnaissance vocale.

2. Procédé selon la revendication 1, dans lequel au moins un dictionnaire est généré en un "mode d'édition off line", à partir des paroles autorisées sauvegardées dans au moins une base de données, après activation d'au moins la fonction d'exploitation du système de navigation, le dictionnaire généré en "mode d'édition off line" étant chargé en temps réel en tant que vocabulaire dans le système de reconnaissance vocale, en fonction d'au moins le dialogue d'entrée.

3. Procédé selon la revendication 1 ou 2, dans lequel au moins une parole est le nom d'une localité et/ou d'une rue, tous les noms de localités autorisés étant mémorisés dans un fichier de destinations et tous les noms de rue autorisés pour au moins un nom de localité autorisé étant mémorisés dans une liste des rues.

4. Procédé selon la revendication 1, dans lequel le système de reconnaissance vocale comporte au moins un identificateur vocal indépendant du locuteur et au moins un identificateur vocal supplémentaire dépendant du locuteur, en fonction d'au moins le dialogue d'entrée, l'identificateur vocal indépendant du locuteur étant utilisé pour la reconnaissance de noms de localités et/ou de noms de rue prononcés individuellement et/ou de caractères et/ou de parties de mots prononcées individuellement et/ou par groupes et l'identificateur local supplémentaire dépendant du locuteur étant utilisé pour la reconnaissance d'au moins un mot-clé prononcé.

5. Procédé selon la revendication 4, dans lequel une adresse de destination déterminée est associée audit au moins un mot-clé, ledit au moins un mot-clé prononcé étant sauvegardé dans un répertoire personnel et un dictionnaire de noms étant généré à partir du répertoire personnel et chargé dans le système de reconnaissance vocale.

6. Procédé selon la revendication 2, dans lequel un dictionnaire de base qui est générée en "mode d'édition off line" contient les "p" plus grandes localités d'un État.

7. Procédé selon la revendication 6, dans lequel le dictionnaire de base est sauvegardé dans une mémoire interne non volatile du système de navigation.

8. Procédé selon la revendication 1, dans lequel un dictionnaire des environs, qui contient "a" localités situées dans les environs du lieu actuel où se trouve le véhicule est généré en temps réel, le dictionnaire des environs étant mis à jour à intervalles réguliers.

9. Procédé selon la revendication 8, dans lequel le dictionnaire des environs est sauvegardé dans une mémoire interne non volatile du système de navigation.

10. Procédé selon la revendication 3, dans lequel après l'activation d'un dialogue d'entrée "épeler la localité de destination", un dictionnaire de mots partiels pour la reconnaissance de l'épellation est chargé dans le système de reconnaissance vocale, l'utilisateur enregistrant ensuite en tant que paroles des lettres individuelles et/ou des groupes de lettres qui sont ensuite comparés dans le système de reconnaissance vocale avec le dictionnaire de mots partiels, une liste d'hypothèses comportant des hypothèses de mots étant créée à partir des lettres reconnues et/ou des groupes de lettres reconnus, les "n" premières hypothèses de mots étant ensuite déduites du fichier de destinations et un dictionnaire de mots entiers étant généré à partir du résultat de la déduction et chargé dans le système de reconnaissance vocale pour la reconnaissance de mots entiers et une valeur acoustique sauvegardée dans le système de reconnaissance vocale étant ensuite comparée avec les dictionnaires de mots entiers pour la reconnaissance de mots entiers, cette valeur acoustique ayant été générée à partir d'une parole prononcée en tant que mot entier, avant le chargement du dictionnaire de mots partiels.

11. Procédé selon la revendication 1, dans lequel après la reconnaissance d'une "destination grossière" enregistrée dans un dialogue d'entrée "enregistrer destination grossière", "m" localités situées dans les environs de la localité "destination grossière" sont calculées en temps réel par le système de navigation et un dictionnaire des destinations précises étant généré à partir de ces "m" localités et chargé dans le système de reconnaissance vocale.

12. Dispositif pour réaliser le procédé selon l'une quelconque des revendications précédentes, dans lequel un système de navigation (2) est relié par l'intermédiaire de connexions (12) correspondantes avec un système de dialogue vocal (1), dans lequel en fonction d'au moins une parole prononcée par un utilisateur dans un système d'enregistrement vocal (5), dès lors que la parole prononcée est reconnue en tant qu'ordre vocal autorisé par un système de reconnaissance vocale (7), une fonction d'exploitation du système de navigation (2) qui est associée à cet ordre vocal est activée par un système de contrôle du dialogue ou du processus (8), toutes les paroles autorisées étant sauvegardées par le système de contrôle du dialogue ou du processus (8) dans au moins une base de données (9 ; 4 ; 3), au moins un dictionnaire étant généré en temps réel par le système de contrôle du dialogue ou du processus (8), à partir des paroles autorisées mémorisées dans au moins la base de données (9 ; 4 ; 3) en fonction d'au moins un dialogue d'entrée qui est un élément d'au moins une fonction d'exploitation et chargé en tant que vocabulaire dans le système de reconnaissance vocale (7).

13. Dispositif selon la revendication 12, dans lequel au moins un dictionnaire généré en "mode d'édition off line" qui est sauvegardé dans au moins une base de données (9 ; 4 ; 3) est chargé en temps réel en tant que vocabulaire dans le système de reconnaissance vocale (7) par le système de contrôle du dialogue ou du processus (8), en fonction d'au moins un dialogue d'entrée.
